(19) Europäisches Patentamt
European Patent Office
Office européen des brevets

(11) **EP 4 668 375 A1**

(12) **EUROPÄISCHE PATENTANMELDUNG**

(43) Veröffentlichungstag:
**24.12.2025 Patentblatt 2025/52**

(21) Anmeldenummer: **24182943.1**

(22) Anmeldetag: **18.06.2024**

(51) Internationale Patentklassifikation (IPC):
**H01M 8/0213** (2016.01)    **H01M 8/0215** (2016.01)
**H01M 8/0228** (2016.01)    **H01M 8/0234** (2016.01)
**H01M 8/10** (2016.01)

(52) Gemeinsame Patentklassifikation (CPC):
**H01M 8/0213; H01M 8/0215; H01M 8/0228;**
**H01M 8/0234;** H01M 2008/1095

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Exentis Knowledge GmbH**
**5608 Stetten AG (CH)**

(72) Erfinder:
• **WEINGART, Andreas**
**79576 Weil am Rhein (DE)**
• **CLOOTS, Michael**
**9008 St.Gallen (CH)**
• **AFDAL, Latifa**
**5608 Stetten (CH)**
• **VAN GARDEREN, Noémie**
**8952 Schlieren (CH)**

(74) Vertreter: **Wenzel Nemetzade Warthmüller**
**Patentanwälte Part mbB**
**Maximilianstraße 2**
**80539 München (DE)**

(54) **BIPOLARPLATTE**

(57)    Bipolarplatte (10), insbesondere für einen Brennstoffzellenstapel, mit einer elektrisch leitfähigen Tragstruktur (20, 22) und mit einem auf der Tragstruktur (20, 22) ausgebildeten Strömungsprofil (30, 32) zur Fluidführung, wobei die Tragstruktur (20, 22) eine Graphitfolie aufweist und/oder als Graphitfolie ausgebildet ist.

Fig. 2

**Beschreibung**

Die vorliegende Erfindung betrifft eine Bipolarplatte, insbesondere für einen Brennstoffzellenstapel, sowie eine Elektrodenplatte, insbesondere für einen Brennstoffzellenstapel. Ebenso betrifft die Erfindung einen Brennstoffzellenstapel sowie ein Verfahren zur Herstellung einer Bipolarplatte.

Brennstoffzellen nutzen ein elektrochemisches Verfahren, eine Reaktion eines Brennstoffs mit einem Oxidationsmittel, um elektrische Energie zu gewinnen. Üblicherweise wird als Brennstoff Wasserstoff und als Oxidationsmittel Sauerstoff, beispielsweise befeuchteter Luftsauerstoff, verwendet.

Dabei handelt es sich bei einer Brennstoffzelle um eine Komponente beziehungsweise Baugruppe eines Brennstoffzellenstapels, wobei der Brennstoffzellenstapel selbst Teil einer Energie liefernden Gesamtvorrichtung sein kann. Im allgemeinen Sprachgebrauch wird der Begriff "Brennstoffzelle" auch für die Gesamtvorrichtung verwendet. Vorliegend soll unter "Brennstoffzelle" jedoch die in einem Brennstoffzellenstapel in einer Vielzahl angeordnete Komponente beziehungswese Baugruppe verstanden werden.

Ein Brennstoffzellenstapel wird dabei in der Regel durch eine Vielzahl im Stack angeordneter Membran-Elektroden-Einheiten gebildet, deren elektrische Leistungen sich addieren. Zwischen jeweils zwei Membran-Elektroden-Einheiten eines solchen Brennstoffzellenstapels ist jeweils eine Bipolarplatte angeordnet. Mit anderen Worten werden zwei in Reihe benachbart angeordnete Brennstoffzellen innerhalb eines Brennstoffzellenstapels durch eine Bipolarplatte voneinander getrennt. Die trennende Bipolarplatte dient als Anode für eine der zwei in Reihe benachbart angeordneten Brennstoffzellen und als Kathode für die andere der zwei in Reihe benachbart angeordneten Brennstoffzellen. Zudem dient die Bipolarplatte als elektrischer Leiter zwischen der Anode und der Kathode.

An den Enden eines Brennstoffzellenstapels sind sogenannte Endplatten angeordneten. Die an einem Ende des Brennstoffzellenstapels angeordnete Brennstoffzelle wird dabei durch eine als Anode dienende Anoden-Endplatte begrenzt. Die an dem jeweils anderen Ende des Brennstoffzellenstapels angeordnete Brennstoffzelle wird hingegen durch eine als Kathode dienende Kathoden-Endplatte begrenzt. Bipolarplatten und Endplatten werden vorliegend im Allgemeinen als Elektrodenplatten verstanden. In solchen Elektrodenplatten integrierte Strömungskanäle ermöglichen die Verteilung von Brennstoff, Oxidationsmittel sowie die Ableitung von Wasser als Reaktionsprodukt.

Die Elektrodenplatten, insbesondere die Bipolarplatten, vereinen somit die Funktionen eines elektrischen Leiters, der Verteilung der Reaktanten, der Wärmeableitung, der mechanischen Stabilität sowie auch der gasdichten Trennung.

Es ist bekannt, Bipolarplatten im Spritzgussverfahren aus einem Graphit- Polyphenylensulfid-Verbundwerkstoff herzustellen. Die Leitfähigkeit einer solchen Bipolarplatte ist begrenzt. Zudem bestehen Restriktionen hinsichtlich der Formgebung einer solchen Bipolarplatte sowie im Hinblick auf die nähere Ausgestaltung der Strömungskanäle sowie der Materialabschnitte zwischen den gegenüberliegend ausgebildeten Strömungskanälen einer Bipolarplatte.

Es ist die Aufgabe der Erfindung eine Bipolarplatte, insbesondere für einen Brennstoffzellenstapel, anzugeben, die mit größerer Flexibilität herstellbar ist und gleichzeitig eine verbesserte Leitfähigkeit, eine geeignete Verteildung der Reaktanten sowie eine ausreichend hohe mechanische Stabilität und auch ein hohes oder erhöhtes Maß an gasdichter Trennung gewährleistet. Ebenso ist es Aufgabe der Erfindung, eine Elektrodenplatte, insbesondere für einen Brennstoffzellenstapel, einen Brennstoffzellenstapel sowie auch ein Verfahren zur Herstellung einer Bipolarplatte anzugeben.

In Bezug auf eine Bipolarplatte ist diese Aufgabe durch den Gegenstand des Anspruchs 1 gelöst worden. Eine Elektrodenplatte ist Gegenstand von Anspruch 12 und ein Brennstoffzellenstapel ist in Anspruch 13 angegeben. Schließlich ist ein Verfahren zur Herstellung einer Bipolarplatte in Anspruch 14 angeben. Vorteilhafte Ausgestaltungen sind Gegenstand der jeweils abhängigen Ansprüche.

Eine erfindungsgemäße Bipolarplatte, insbesondere für einen Brennstoffzellenstapel, ist mit einer elektrisch leitfähigen Tragstruktur und mit einem auf der Tragstruktur ausgebildeten Strömungsprofil zur Fluidführung ausgestattet. Erfindungsgemäß ist vorgesehen, dass die Tragstruktur eine Graphitfolie aufweist oder als Graphitfolie ausgebildet ist.

Durch den Einsatz einer Graphitfolie wird in besonders vorteilhafter Weise eine äußerst hohe Wärmeleitfähigkeit sowie eine besonders gute elektrische Leitfähigkeit bei gleichzeitig hoher mechanischer Stabilität sichergestellt. Gleichzeitig kann durch den Einsatz einer Graphitfolie die Erzeugung des Strömungsprofils auf der Graphitfolie gesondert erfolgen und es kann eine größere Flexibilität in der Herstellung und/oder Formgebung und/oder Materialwahl des Strömungsprofils erreicht werden. Insgesamt kann in vorteilhafter Weise eine verbesserte Leistung, Effizienz und Zuverlässigkeit der die Bipolarplatte aufweisenden oder nutzenden Brennstoffzelle gewährleistet werden.

Die Tragstruktur dient insbesondere der mechanischen Stabilität der jeweiligen Bipolarplatte sowie auch der gasdichten Trennung zwischen der Anodenseite und der Kathodenseite. Ebenso dient die Tragstruktur als tragendes Element für das Strömungsprofil. Das Strömungsprofil auf der Tragstruktur kann beispielsweise eine Vielzahl von Strömungskanälen beziehungsweise eine Vielzahl von Strömungskanalabschnitten aufweisen. Das Strömungsprofil kann aus einer Vielzahl von Rippen gebildet sein, die auf der Tragstruktur ausgebildet sind. Dabei können die Rippen die Strömungskanalwände bilden. Die Rippen können zumindest teilweise als Wärmetransportrippen ausgebildet sein. Wärmetransportrippen können eine größere Wandstärke aufweisen als andere Rippen.

Das Strömungsprofil kann einen Strömungskanal oder mehrere Strömungskanäle aufweisen, insbesondere für die Führung von Reaktionsmittel, bevorzugt einen oder mehrere Brennstoffkanäle und/oder einen oder mehrere Oxidationsmittelkanäle und/oder einen oder mehrere Wasserabführkanäle aufweisen.

Gemäß einer vorteilhaften Ausführungsform der Erfindung kann vorgesehen sein, dass die Tragstruktur ausschließlich durch eine Graphitfolie ausgebildet ist. Dadurch wird vorteilhaft eine sehr hohe elektrische Leitfähigkeit und gleichzeitig eine einfache Herstellung gewährleistet.

Gemäß einer weiteren vorteilhaften Ausführungsform der Erfindung kann die Graphitfolie eine Dicke von mehr als 0,05 mm, bevorzugt von mehr als 0,1 mm, bevorzugt von mehr als 0,2 mm, bevorzugt von mehr als 0,3 mm, bevorzugt von mehr als 0,4 mm, weiter bevorzugt von mehr als 0,45 mm, weiter bevorzugt von mehr als 0,5 mm oder von 0,5 mm aufweisen. Tragstrukturen mit einer derart bemessenen Graphitfolie weisen, insbesondere in einem Verbund mit dem Strömungsprofil, eine ausreichend hohe mechanische Stabilität auf.

Gemäß einer weiter bevorzugten Weiterbildung kann die Graphitfolie eine Dicke von weniger als 3 mm, bevorzugt von weniger als 2,5 mm, bevorzugt von weniger als 2 mm, bevorzugt von weniger als 1,5 mm, bevorzugt von weniger als 1 mm, weiter bevorzugt von weniger als 0,8 mm, weiter bevorzugt von weniger als 0,7 mm, weiter bevorzugt von weniger als 0,6 mm aufweisen. Durch eine derart bemessene Graphitfolie kann die Tragstruktur trotz hoher Wärmeleitfähigkeit und elektrischer Leitfähigkeit vorteilhaft dünn und materialsparend ausgebildet werden.

In einer ferner bevorzugten Weiterbildung kann die Graphitfolie eine Dicke von 0,1 mm bis 2 mm, bevorzugt von 0,2 mm bis 1,5 mm, weiter bevorzugt von 0,3 mm bis 1 mm, weiter bevorzugt von 0,4 mm bis 0,8 mm, weiter bevorzugt von 0,4 mm bis 0,7 mm, weiter bevorzugt von 0,4 mm bis 0,6 mm aufweisen. Tragstrukturen mit derart bemessenen Graphitfolien weisen eine ausreichende Stabilität bei gleichzeitig materialsparender Ausgestaltung auf.

Gemäß einer besonders bevorzugten Weiterbildung kann die Graphitfolie einen Massenanteil an Kohlenstoff von mehr als 90 %, bevorzugt von mehr als 95 %, weiter bevorzugt von mehr als 98 %, noch weiter bevorzugt von mehr als 99 %, noch weiter bevorzugt von mehr als 99,5 %, noch weiter bevorzugt von mehr als 99,85 %, noch weiter bevorzugt von mehr als 99,9 % aufweisen. Durch einen hohen Massenanteil an Kohlenstoff beziehungsweise mit einer hohen Reinheit der Graphitfolie kann ein besonders hohes Maß an elektrischer Leitfähigkeit der Tragstruktur sichergestellt werden. Die Leistungsfähigkeit des jeweiligen Brennstoffzellenstapels kann auf diese Weise vorteilhaft verbessert werden.

In einer besonderen Weiterbildung kann die Graphitfolie neben Kohlenstoff weitere Zusätze aufweisen oder frei von weiteren Zusätzen ausgebildet sein. Ebenso kann die Graphitfolie als Rest unvermeidbare Verunreinigungen aufweisen. Dadurch kann die Bipolarplatte in vorteilhafter Weise an die jeweiligen Anforderungen angepasst sein beziehungsweise eine besonders kostengünstige und/oder effiziente Fertigung der Graphitfolie bewerkstelligt werden.

Besonders bevorzugt kann die Graphitfolie neben Kohlenstoff einen Massenanteil an Asche von weniger als 0,5 %, bevorzugt von weniger als 0,4 %, noch weiter bevorzugt von weniger als 0,3 %, noch weiter bevorzugt von weniger als 0,2 %, noch weiter bevorzugt von weniger als 0,15 %, noch weiter bevorzugt von weniger als 0,1 % aufweisen. Durch einen geringeren Aschegehalt in der Graphitfolie kann ein besonders hoher Reinheitsgrad erreicht und damit eine noch höhere Wärmeleitfähigkeit sowie elektrische Leitfähigkeit sichergestellt werden.

Darüber hinaus kann die Graphitfolie neben Kohlenstoff, und insbesondere neben Asche, einen Massenanteil an Schwefel von weniger als 0,05 %, bevorzugt von weniger als 0,04 %, noch weiter bevorzugt von weniger als 0,03 %, noch weiter bevorzugt von weniger als 0,02 %, noch weiter bevorzugt von weniger als 0,01 % aufweisen. Durch einen geringeren Schwefelgehalt in der Graphitfolie kann ebenso ein hoher Reinheitsgrad und damit eine weiter verbesserte Wärmeleitfähigkeit sowie elektrische Leitfähigkeit der Tragstruktur erzielt werden.

In einer weiter vorteilhaften Weiterbildung der Bipolarplatte kann vorgesehen sein, dass die Graphitfolie neben Kohlenstoff, und insbesondere auch neben Asche und/oder Schwefel, einen Massenanteil an Chlorid von weniger als 0,005 %, bevorzugt von weniger als 0,004 %, noch weiter bevorzugt von weniger als 0,003 %, noch weiter bevorzugt von weniger als 0,002 %, noch weiter bevorzugt von weniger als 0,001 % aufweisen. Durch einen derart geringeren Gehalt an Chlorid kann ein noch weiter verbesserter Reinheitsgrad der Graphitfolie erreicht werden.

Zusätzlich neben Kohlenstoff und einem Massenanteil von Chlorid kann die Graphitfolie einen Massenanteil an Asche von weniger als 0,5 %, bevorzugt von weniger als 0,4 %, noch weiter bevorzugt von weniger als 0,3 %, noch weiter bevorzugt von weniger als 0,2 %, noch weiter bevorzugt von weniger als 0,15 %, noch weiter bevorzugt von weniger als 0,1 % aufweisen und/oder einen Massenanteil an Schwefel von weniger als 0,05 %, bevorzugt von weniger als 0,04 %, noch weiter bevorzugt von weniger als 0,03 %, noch weiter bevorzugt von weniger als 0,02 %, noch weiter bevorzugt von weniger als 0,01 % aufweisen.

In einer vorteilhaften Ausführungsform der Erfindung kann die Graphitfolie neben Kohlenstoff einen Massenanteil an Halogen von weniger als 0,01 %, bevorzugt von weniger als 0,008 %, noch weiter bevorzugt von weniger als 0,007 %, noch weiter bevorzugt von weniger als 0,006 %, noch weiter bevorzugt von weniger als 0,005 %, noch weiter bevorzugt von weniger als 0,004 % aufweisen. Durch einen geringeren Halogengehalt kann der Reinheitsgehalt der Graphitfolie weiter erhöht und im Einsatz ein besonders hohes Maß an Langlebigkeit der Brennstoffzelle erreicht werden.

Zusätzlich neben Kohlenstoff und dem Massenanteil Halogen, kann die Graphitfolie einen Massenanteil an Asche von weniger als 0,5 %, bevorzugt von weniger als 0,4 %, noch weiter bevorzugt von weniger als 0,3 %, noch weiter bevorzugt von weniger als 0,2 %, noch weiter bevorzugt von weniger als 0,15 %, noch weiter bevorzugt von weniger als 0,1 % aufweisen und/oder einen Massenanteil an Schwefel von weniger als 0,05 %, bevorzugt von weniger als 0,04 %, noch weiter bevorzugt von weniger als 0,03 %, noch weiter bevorzugt von weniger als 0,02 %, noch weiter bevorzugt von weniger als 0,01 % aufweisen und/oder einen Massenanteil an Chlorid von weniger als 0,005 %, bevorzugt von weniger als 0,004 %, noch weiter bevorzugt von weniger als 0,003 %, noch weiter bevorzugt von weniger als 0,002 %, noch weiter bevorzugt von weniger als 0,001 % aufweisen.

In einer weiteren vorteilhaften Ausführungsform der Erfindung kann die Graphitfolie gasdicht ausgebildet sein. Dies erlaubt vorteilhaft eine zuverlässige Trennung der Reaktionsgase und damit eine sichere Funktionsweise der jeweiligen Brennstoffzellen.

In einer bevorzugten Weiterbildung der Bipolarplatte kann die Graphitfolie aus gepresstem und/oder expandiertem Graphit, insbesondere Naturgraphit, ausgebildet sein. Dies führt zu einer Vielzahl von Vorteilen, beispielsweise einer hohen Temperaturbeständigkeit von -250°C bis etwa 3000°C, sehr guten Dichteigenschaften, einer geringen Permeabilität gegenüber den Reaktanten, einem sehr guten Federverhalten, insbesondere einem langzeitstabilen Kompressions- und/oder Rückfederungsverhalten, einer guten Alterungsbeständigkeit und/oder einer nur geringen Neigung zur Versprödung. Dies gilt insbesondere für eine bindemittelfreie Ausgestaltung der Graphitfolie. Ferner gewährleistet eine solche Graphitfolie eine hohe Beständigkeit gegen chemische Medien.

Gemäß einer weiter bevorzugten Weiterbildung kann die Graphitfolie einen Einsatztemperaturbereich von -350 °C bis +550 °C, bevorzugt von -300 °C bis +500 °C, noch weiter bevorzugt von -250 °C bis +450 °C aufweisen. Dadurch wird es möglich, selbst größere Temperaturspitzen beziehungsweise Temperaturschwankungen unbeschadet zu überstehen und die Lebensdauer der Bipolarplatte kann sich nennenswert erhöhen.

In einer besonders bevorzugten Weiterbildung kann die Graphitfolie, insbesondere bei 25°C, eine Dichte von 0,9 g/cm³ bis 1,1 g/cm³, 0,95 g/cm³ bis 1,05 g/cm³, noch weiter bevorzugt von 1 g/cm³ oder von etwa 1 g/cm³ aufweisen. Eine derartige Dichte stellt einen für die Funktionen einer Elektrodenplatte, insbesondere einer Bipolarplatte, vorteilhaften Kompromiss zwischen einer hohen mechanischen Festigkeit einerseits und einer gewichtssparenden Ausgestaltung dar.

In einer besonders bevorzugten Weiterbildung kann die Graphitfolie in Dickenrichtung eine Wärmeleitfähigkeit von 1 W/mK bis 10 W/mK, bevorzugt von 3 W/mK bis 8 W/mK, weiter bevorzugt von 4 W/mK bis 6 W/mK, bevorzugt von 5 W/mK aufweisen. Dadurch kann die Reaktionswärme vorteilhaft besonders gut über die Fläche der Tragstruktur verteilt aufgenommen und weitergeleitet werden.

Gemäß einer noch weiter bevorzugten Weiterbildung kann die Graphitfolie entlang Ihrer Lagenerstreckung, insbesondere quer zu einer Dickenrichtung, eine Wärmeleitfähigkeit von 100 W/mK bis 200 W/mK, bevorzugt von 120 W/mK bis 180 W/mK, weiter bevorzugt von 130 W/mK bis 160 W/mK, noch weiter bevorzugt von 130 W/mK bis 150 W/mK, noch weiter bevorzugt von 140 W/mK aufweisen. Dadurch kann die im Betrieb entstehende Reaktionswärme in vorteilhafterweise in Richtungen der Lagenerstreckung nach außen abgeführt werden, wodurch eine Überhitzung oder Schädigung der Bipolarplatte und/oder der jeweiligen Brennstoffzellen vermieden oder die Gefahr einer Beschädigung reduziert werden kann.

Nach einer weiteren Ausführungsform kann besonders bevorzugt beidseitig auf der Tragstruktur ein Strömungsprofil zur Fluidführung ausgebildet sein. Dadurch wird auf einfache Weise und mit geringem konstruktivem Aufwand sowohl ein Strömungsprofil für den Brennstoff als auch ein Strömungsprofil für das Oxidationsmittel geschaffen.

Darüber hinaus kann in vorteilhafter Weise das Strömungsprofil mittels additiver Fertigung, insbesondere mittels 3D-Siebdrucks, auf die Tragstruktur aufgebracht sein. Ein derartig hergestelltes Strömungsprofil kann vorteilhaft besonders leicht und stabil ausgebildet und hochpräzise hergestellt sein. Der Einsatz des 3D-Siebdruckverfahrens ermöglicht zudem eine weitgehend freie Formgebung des Strömungsprofils und somit eine flexibel an den jeweiligen Anwendungsfall gewählte geometrische Ausgestaltung. Zudem können durch den Einsatz des 3D-Siebdrucks besonders feine geometrische Strukturen erzeugt werden und somit eine besonders hohe Funktionalität des Strömungsprofils im Hinblick auf die Verteilung der Reaktanten gewährleistet werden.

Gleichzeitig besteht beim Einsatz des 3D-Siebdrucks ein hohes Maß an Materialfreiheit, sodass der zur Erzeugung des Strömungsprofils verwendete Werkstoff beziehungsweise die jeweilige Materialzusammensetzung besonders vorteilhaft an die jeweiligen Einsatzbedingungen und die gewünschte Funktionalität angepasst werden kann. Durch den Einsatz des 3D-Siebdrucks kann zudem eine besonders kostengünstige und effiziente Fertigung gewährleistet werden.

Gemäß einer noch weiter vorteilhaften Ausgestaltung der Bipolarplatte kann vorgesehen sein, dass das Strömungsprofil aus einem anderen Werkstoff oder anderen Werkstoffen gebildet ist als die Tragstruktur und/oder dass das Strömungsprofil eine andere Werkstoffzusammensetzung aufweist als die Tragstruktur. Insbesondere da die Tragstruktur durch den Einsatz einer Graphitfolie bereits eine besonders gute elektrische Leitfähigkeit und eine hohe Wärmeleitfähigkeit aufweist, kann das Strömungsprofil aus einem Werkstoff ausgebildet sein, der eine höhere Mechanische Stabilität aufweist und/oder der die Ausbildung einer Oberflächenbeschaffenheit erlaubt, die zu geringeren Strömungsverlusten der Reaktanten führt oder eine besonders vorteilhafte Fluidführung begünstigt.

Der Werkstoff oder die Werkstoffe für die Herstellung des Strömungsprofils oder der Strömungsprofile kann zudem auch auf eine besonders gute Verarbeitbarkeit, insbesondere im Wege des 3D-Siebdrucks, gewählt sein.

Gemäß einer noch weiter vorteilhaften Ausführungsform kann das Strömungsprofil auf beiden Seiten der Tragstruktur aus einem identischen Werkstoff oder identischen Werkstoffen gebildet sein. Beidseitig auf der Tragstruktur angeordnete Strömungsprofile können identische Werkstoffzusammensetzungen aufweisen. Dadurch reduzieren sich die Kosten für die Herstellung der Bipolarplatte nennenswert, da bei der Herstellung mehrerer Strömungsprofile eine bestehende Fertigungskonfiguration beibehalten werden kann.

Gemäß einer weiter vorteilhaften Ausführungsform der Erfindung kann das Strömungsprofil auf einer Seite der Tragstruktur aus einem anderen Werkstoff oder anderen Werkstoffen gebildet sein als das Strömungsprofil auf der jeweils anderen Seite der Tragstruktur. Beidseitig auf der Tragstruktur angeordnete Strömungsprofile können andere Werkstoffzusammensetzungen aufweisen. Dadurch kann vorteilhaft der Werkstoff des auf der Anodenseite ausgebildeten Strömungsprofils auf das Oxidationsmittel abgestimmt sein. Gleichzeitig kann der Werkstoff oder die Werkstoffzusammensetzung des auf der Kathodenseite ausgebildeten Strömungsprofils auf den Brennstoff abgestimmt sein. Dies kann insbesondere die Diffusion der Reaktanten verbessern beziehungsweise zu einer weitergehend verbesserten Fluidführung beitragen.

Das Strömungsprofil kann gemäß einer bevorzugten Ausgestaltung aus einem elektrisch nichtleitenden oder einem eine geringe elektrische Leitfähigkeit aufweisenden Material bestehen. Ein solches Material kann jedoch eine gute Wärme- und Flüssigkeitsleitfähigkeit aufweisen, um vorteilhaft einen möglichst reibungsarmen Durchfluss der Reaktanten sicherzustellen.

In einer bevorzugten Weiterbildung der Erfindung kann das Strömungsprofil aus einem Werkstoff gebildet sein, der eine geringere elektrische Leitfähigkeit aufweist als der Werkstoff der Tragstruktur. Das Material des Strömungsprofils kann mithin bevorzugt im Hinblick auf eine effiziente und kostengünstige Fertigung gewählt sein, wohingegen die elektrische Leitfähigkeit der Bipolarplatte vornehmlich oder ausschließlich durch die Tragstruktur gewährleistet wird.

In einer weiter bevorzugten Ausgestaltung der Bipolarplatte kann das Strömungsprofil eine Kanalstruktur und/oder Kanalwandabschnitte aufweisen und/oder zumindest ein Kanalabschnitt des Strömungsprofils und/oder der Kanalstruktur seitlich durch Kanalwandabschnitte und/oder bodenseitig durch die Tragstruktur begrenzt sein. Dadurch wird auf einfache Weise ein Strömungsprofil geschaffen, das einen besonders effizienten Transport der Reaktanten ermöglicht. Ferner ist ein derart ausgebildetes Strömungsprofil sehr kostengünstig und mit nur geringem Fertigungsaufwand herstellbar.

In einer noch weiter bevorzugten Ausgestaltung kann zumindest ein Kanalabschnitt des Strömungsprofils und/oder der Kanalstruktur bodenseitig zumindest abschnittsweise durch einen freiliegenden und/oder unbeschichteten Oberflächenabschnitt der Tragstruktur begrenzt sein. Dadurch wird eine bei der additiven Fertigung einfach herstellbare Bipolarplatte geschaffen, so dass die Kosten für die Herstellung der Bipolarplatte vorteilhaft reduziert werden können. Ferner kann durch eine solche Ausgestaltung eine elektrisch leitende Verbindung zwischen der Anode einer Zelle mit der Kathode der jeweiligen Nachbarzelle gewährleistet werden, nämlich auch bei einem elektrisch nicht leitfähigen Strömungsprofil oder bei einem Strömungsprofil mit geringerer elektrischer Leitfähigkeit.

In einer besonders bevorzugten Ausgestaltung kann das Strömungsprofil zumindest abschnittsweise porös, insbesondere zumindest teilweise oder vollständig offen porös, ausgebildet sein und/oder das Strömungsprofil kann eine raue Oberfläche aufweisen. Ein poröses Strömungsprofil, insbesondere ein offen poröses Strömungsprofil verbessert vorteilhaft die Diffusion der Reaktanten zu den Elektroden. Darüber hinaus sorgt die poröse Struktur im Strömungsprofil für eine gleichmäßigere Verteilung der Reaktanten über die gesamte Oberfläche der elektroaktiven Schicht. Dies hilft, hohe Konzentrationen von Reaktanten zu vermeiden und eine gleichmäßige Reaktionsaktivität über die gesamte Brennstoffzelle hinweg sicherzustellen. Die Porosität ermöglicht es auch, dass etwaige Verunreinigungen oder Produktgase leichter durch das Strömungsprofil abgeführt werden können. Dies stellt eine insgesamt sichere Strömung von Reaktanten entlang oder innerhalb des Strömungsprofils sicher. Insgesamt führt dies zu einer effizienteren Nutzung der Bipolarplatte und damit zu einer verbesserten Leistung der Brennstoffzelle.

Gemäß einer weiter bevorzugten Ausgestaltung kann das Strömungsprofil eine Porosität $\Phi$ von über 10%, bevorzugt über 15%, weiter bevorzugt von über 20%, weiter bevorzugt von über 25%, weiter bevorzugt von über 30%, weiter bevorzugt von über 35%, weiter bevorzugt von über 40%, weiter bevorzugt von über 50%, weiter bevorzugt von über 55% aufweisen. Die Porosität $\Phi$ kann gebildet sein als Verhältnis $\Phi = V_H / V$. Dabei steht

$V_H$ für ein durchschnittliches Hohlraumvolumen, V für ein Gesamtvolumen bestehend aus der Summe von $V_H$ und $V_F$. $V_F$ steht für ein Feststoffvolumen.

Eine Porosität Φ von über 10%, bevorzugt über 15%, weiter bevorzugt von über 20%, weiter bevorzugt von über 25%, weiter bevorzugt von über 30%, weiter bevorzugt von über 35%, weiter bevorzugt von über 40%, weiter bevorzugt von über 50%, weiter bevorzugt von über 55%, führt zu besonders guten Eigenschaften der Bipolarplatte hinsichtlich der Verteilung der Reaktanten. Das Strömungsprofil kann zumindest abschnittsweise eine voranstehend angegebene Porosität Φ aufweisen, insbesondere zumindest teilweise oder vollständig offen porös in vorbezeichnetem Umfang, ausgebildet sein. Das Strömungsprofil kann unterschiedliche Abschnitte mit unterschiedlichen Porositätswerten $Φ_i$ aufweisen, wobei der Index i für den entsprechenden Abschnitt des Strömungsprofils steht.

Besonders bevorzugt kann das Strömungsprofil eine Porosität Φ von unter 90%, weiter bevorzugt von unter 80%, weiter bevorzugt von unter 70%, weiter bevorzugt von unter 60%, weiter bevorzugt von unter 50%, weiter bevorzugt von unter 40%, aufweist, wobei die Porosität Φ gebildet ist als Verhältnis $Φ = V_H / V$. Dabei steht $V_H$ für ein durchschnittliches Hohlraumvolumen, V für ein Gesamtvolumen bestehend aus der Summe von $V_H$ und $V_F$. $V_F$ steht für ein Feststoffvolumen.

Ein Strömungsprofil mit einer Porosität Φ von unter 90%, weiter bevorzugt von unter 80%, weiter bevorzugt von unter 70%, weiter bevorzugt von unter 60%, weiter bevorzugt von unter 50%, weist bei gleichzeitig guten Verteileigenschaften für die jeweiligen Reaktanten vorteilhaft eine ausreichend hohe mechanische Stabilität auf.

In einer weiter vorteilhaften Ausführungsform kann das Strömungsprofil mechanischen Druckspannungen von mindestens 0,5 GPa, mindestens 1 GPa, mindestens 2 GPa und/oder von bis zu 3 GPa, bis zu 4 GPa und/oder von bis zu 5 GPa oder 6 GPa standhalten. Dabei kann das Strömungsprofil zumindest abschnittsweise oder vollständig derartigen mechanischen Druckspannungen standhalten. Durch einen derart hohen Druckspannungswiderstand lässt sich vorteilhaft eine gute mechanische Stabilität der gesamten Bipolarplatte realisieren. Das Strömungsprofil kann solchen Druckspannungen insbesondere standhalten, sofern dieses aus einem Silikonharz oder Epoxidharz, besonders bevorzugt aus einem additivfreien Silikonharz oder einem additivfreien Epoxidharz ausgebildet ist oder einen solchen Werkstoff aufweist.

In einer vorteilhaften Weiterbildung der Bipolarplatte kann das Strömungsprofil mechanischen Druckspannungen von mindestens 100 GPa, mindestens 200 GPa, mindestens 300 GPa und/oder von bis zu 300 GPa, bis zu 400 GPa und/oder von bis zu 500 GPa standhalten. Dabei kann das Strömungsprofil zumindest abschnittsweise oder vollständig derartigen mechanischen Druckspannungen standhalten. Durch einen derart hohen Druckspannungswiderstand lässt sich vorteilhaft eine besonders vorteilhafte mechanische Stabilität der Bipolarplatte realisieren. Das Strömungsprofil kann solchen Druckspannungen insbesondere standhalten, sofern dieses aus einem nicht gesinterten $Al_2O_3$- Verbundwerkstoff ausgebildet ist oder einen solchen Werkstoff aufweist.

In einer weiter vorteilhaften Ausführungsform der Bipolarplatte kann das Strömungsprofil eine Wärmeleitfähigkeit von 0,05 W/mK bis 0,5 W/mK, bevorzugt von 0,05 W/mK bis 0,4 W/mK, weiter bevorzugt von 0,1 W/mK bis 0,3 W/mK aufweisen. Dabei kann das Strömungsprofil zumindest abschnittsweise oder vollständig eine derartige Wärmeleitfähigkeit aufweisen. Da die Graphitfolie der Tragstruktur bereits eine hohe Wärmeleitfähigkeit aufweist, kann das Strömungsprofil aus einem Material mit einer verhältnismäßig geringen Wärmeleitfähigkeit gefertigt werden. Der Gesamtaufbau der Bipolarplatte kann damit flexibler an die jeweiligen Einsatzbedingungen und im Hinblick auf eine kostengünstige Fertigung angepasst werden. Das Strömungsprofil kann eine solche Wärmeleitfähigkeit insbesondere aufweisen, sofern dieses aus einem Silikonharz oder Epoxidharz, besonders bevorzugt, wenn das Strömungsprofil aus einem additivfreien Silikonharz oder einem additivfreien Epoxidharz ausgebildet ist oder einen solchen Werkstoff aufweist.

In einer weiteren vorteilhaften Ausführungsform der Erfindung kann das Strömungsprofil, eine Wärmeleitfähigkeit von 10 W/mK bis 50 W/mK, bevorzugt von 15 W/mK bis 45 W/mK, weiter bevorzugt von 20 W/mK bis 40 W/mK aufweisen. Dabei kann das Strömungsprofil abschnittsweise oder vollständig eine derartige Wärmeleitfähigkeit aufweisen. Durch eine derart hohe Wärmeleitfähigkeit kann das Strömungsprofil die Prozesswärme vorteilhaft sehr effektiv an die Graphitfolie abführen und eine Ableitung aus der Bipolarplatte insgesamt begünstigen. Das Strömungsprofil kann eine solche Wärmeleitfähigkeit insbesondere aufweisen, sofern dieses aus einem nicht gesinterten Al2O3-Verbundwerkstoff ausgebildet ist oder einen solchen Werkstoff aufweist.

In einer weiter bevorzugten Ausgestaltung der Erfindung kann das Strömungsprofil auf einer Seite der Tragstruktur eine Strömungsprofildicke von mehr als 0,1 mm, bevorzugt von mehr als 0,2 mm, bevorzugt von mehr als 0,3 mm, bevorzugt von mehr als 0,4 mm, bevorzugt von mehr als 0,5 mm, weiter bevorzugt von mehr als 0,6 mm, weiter bevorzugt von mehr als 0,65 mm oder von 0,7 mm aufweisen. Strömungsprofile mit einer derartigen Mindestdicke weisen eine gute mechanische Stabilität auf und zudem ausreichend dimensionierte Strömungskanäle für eine geeignete Fluidförderung auf.

In einer ferner bevorzugten Weiterbildung der Erfindung kann das Strömungsprofil auf einer Seite der Tragstruktur eine Strömungsprofildicke von weniger als 1,5 mm, bevorzugt von weniger als 1,2 mm, bevorzugt von weniger als 1 mm, bevorzugt von weniger als 0,9 mm, bevorzugt von weniger als 0,8 mm, weiter bevorzugt von weniger als 0,75 mm aufweisen. Derart bemessene Strömungsprofile können materialsparend erzeigt werden und gleichzeitig ausreichend bemessene Strömungskanäle sicherstellen.

In einer besonders bevorzugten Weiterbildung können Strömungsprofile auf beiden Seiten der Tragstruktur dieselbe Strömungsprofildicke oder unterschiedliche Strömungsprofildicken aufweisen. Weisen die Strömungsprofile dieselbe Dicke auf, so ergeben sich in vorteilhafter Weise symmetrische oder weitgehend symmetrische mechanische Eigenschaften der Bipolarplatte. Weisen die Strömungsprofile auf den beiden Seiten der Tragstruktur unterschiedliche Dicken auf, so kann die Bipolarplatte vorteilhaft an die jeweilige Fluidförderung der unterschiedlichen Reaktanten angepasst sein. Zudem kann zumindest auf einer Seite der Tragstruktur eine materialsparende Ausgestaltung des Strömungsprofils realisiert werden.

In einer besonders bevorzugten Weiterbildung kann ein Gesamtaufbau bestehend aus der Tragstruktur und zwei beidseitig der Tragstruktur angeordneten Strömungsprofilen eine Gesamtdicke von mehr als 1 mm, bevorzugt von mehr als 1,2 mm, bevorzugt von mehr als 1,4 mm, bevorzugt von mehr als 1,5 mm, bevorzugt von mehr als 1,6 mm, weiter bevorzugt von mehr als 1,65 mm, weiter bevorzugt von mehr als 1,7 mm oder von 1,75 mm aufweisen. Dadurch wird vorteilhaft eine Bipolarplatte mit einer insgesamt hohen mechanischen Stabilität bei gleichzeitig ausreichend bemessenen Strömungskanälen zur Verteilung der Reaktanten geschaffen.

In einer besonderen Weiterbildung kann ein Gesamtaufbau bestehend aus der Tragstruktur und zwei beidseitig der Tragstruktur angeordneten Strömungsprofilen eine Gesamtdicke von weniger als 2,5 mm, bevorzugt von weniger als 2,2 mm, bevorzugt von weniger als 2,1 mm, bevorzugt von weniger als 2 mm, bevorzugt von weniger als 1,9 mm, noch weiter bevorzugt von weniger als 1,8 mm aufweist. Dadurch wird vorteilhaft eine Bipolarplatte geschaffen, die einerseits eine ausreichende mechanische Stabilität aufweist und gleichzeitig eine platz- und materialsparende Ausgestaltung gewährleistet.

Besonders bevorzugt kann das Strömungsprofil frei von Sinterung ausgehärtet sein. Durch ein frei von Sinterung ausgehärtetes Strömungsprofil kann vorteilhaft eine Beschädigung der Graphitfolie vermieden werden, so dass die Bipolarplatte eine besonders hohe Zuverlässigkeit im Betrieb gewährleisten kann. Insgesamt ergibt sich zudem eine kostengünstige Fertigung, da eine verhältnismäßig Aufwändige Sinterung entfallen kann.

Gemäß einer weiter bevorzugten Ausgestaltung der Bipolarplatte kann das Strömungsprofil aus einer durch Ultraviolettlicht aushärtenden Druckpaste erzeugt sein. Die Fertigung mit einer solchen Druckpaste kann besonders effizient und mit nur geringem Aufwand erfolgen. Gleichzeitig kann bei Aushärtung durch Ultraviolettlicht eine temperaturbelastende Sinterung entfallen und eine temperaturbedingte Materialbeanspruchung kann vermieden werden. Insbesondere lässt sich hierdurch eine Temperaturbelastung der Graphitfolie verringert oder ganz vermieden werden. Dies erhöht vorteilhaft die Lebensdauer und verringert einen etwaigen Ausschuss der jeweiligen Bipolarplatten.

In einer noch weiter vorteilhaften Ausgestaltung der Bipolarplatte kann das Strömungsprofil aus einer lösungsmittelbasierten Druckpaste erzeugt sein. Dies führt ebenfalls zu einer effizienteren und kostengünstigeren Herstellbarkeit der Bipolarplatte, bei gleichzeitig hoher Zuverlässigkeit und Betriebssicherheit des durch die Druckpaste erzeugten Strömungsprofils.

In einer vorteilhaften Ausführungsform der Erfindung kann das Strömungsprofil aus einer einen Feststoff aufweisenden Druckpaste erzeugt sein. Hierdurch kann in vorteilhafter Weise die mechanische Stabilität der Bipolarplatte erhöht und ein Druckprozess vereinfacht werden.

Gemäß einer weiter vorteilhaften Ausführungsform der Bipolarplatte kann das Strömungsprofil aus einem Silikonharz und/oder aus einem Epoxidharz erzeugt sein, insbesondere aus einem Silikonharz und/oder aus einem Epoxidharz das frei von Additiven ausgebildet ist. Hierdurch können eine hohe mechanische Stabilität und gleichzeitig eine kostengünstige Fertigung, insbesondere im Wege des 3D-Siebdrucks, gewährleistet werden. Silikonharze und/oder Epoxidharze gewährleisten zudem eine hohe Haftfestigkeit, niedrige Schwindung, eine verhältnismäßig hohe Hitzebeständigkeit, Chemikalienbeständigkeit und/oder Korrosionsbeständigkeit sowie auch eine geringe Feuchtigkeitsaufnahme. Die Betriebssicherheit und Langlebigkeit einer solchen Bipolarplatte kann somit weiter verbessert werden.

In einer noch weiter bevorzugten Weiterbildung der Bipolarplatte kann das Strömungsprofil aus einer einen Keramikwerkstoff, insbesondere Aluminiumnitrid und/oder Aluminiumoxid, aufweisenden Druckpaste erzeugt sein und/oder kann das Strömungsprofil aus einer ein Keramikpulver, insbesondere Aluminiumnitrid und/oder Aluminiumoxid in Pulverform, aufweisenden Druckpaste erzeugt sein. Dadurch weist die Bipolarplatte eine verhältnismäßig gute Wärmeleitfähigkeit und bei gleichzeitig sehr guter mechanischer Stabilität auf. Durch einen solchen Keramikwerkstoff wird eine sehr hohe Druckfestigkeit sowie eine hohe Härte und zusätzlich auch eine hohe Korrosions- und Verschleißbeständigkeit gewährleisten. Zudem werden auch hohe Einsatztemperaturen ermöglicht.

In einer ferner bevorzugten Weiterbildung der Bipolarplatte kann das Strömungsprofil aus einer einen Metall- und/oder Stahlwerkstoff aufweisenden Druckpaste erzeugt sein und/oder das Strömungsprofil kann aus einer ein Metall- und/oder Stahlpulver aufweisenden Druckpaste erzeugt sein. Dadurch weist auch das Strömungsprofil der Bipolarplatte in vorteilhafter Weise eine sehr gute Wärmeleitfähigkeit und auch eine sehr hohe elektrische Leitfähigkeit auf. Gleichzeitig können sehr vorteilhafte mechanische Eigenschaften gewährleistet werden.

In einer besonders bevorzugten Weiterbildung kann das Strömungsprofil aus einer einen Graphitwerkstoff aufweisenden Druckpaste erzeugt sein. Ebenso kann das Strömungsprofil aus einer Graphitpulver aufweisenden Druckpaste erzeugt sein. Durch den Einsatz eines Graphitwerkstoffs oder eines Graphitpulvers wird vorteilhaft eine hohe mechanische Stabilität und eine weiter verbesserte elektrische Leitfähigkeit des Strömungsprofils erreicht. Die Eigenschaften des Strömungsprofils können somit an die Eigenschaften der Graphitfolie angepasst sein beziehungsweise lassen sich Eigenschaftsunterschiede zwischen der Tragstruktur und dem Strömungsprofil damit verringern.

In einer besonders bevorzugten Weiterbildung kann das Strömungsprofil in gedrucktem und ausgehärtetem Zustand zumindest einen Anteil eines Keramikwerkstoffs, insbesondere Aluminiumnitrid und/oder Aluminiumoxid aufweisen. Durch den Einsatz eines Keramikwerkstoffs wird vorteilhaft die mechanische Stabilität erhöht und die elektrische Leitfähigkeit des Strömungsprofils kontrolliert beeinflusst. Ebenso kann durch einen solchen Keramikwerkstoff eine hohe Druckfestigkeit sowie eine hohe Härte und zusätzlich auch eine hohe Korrosions- und Verschleißbeständigkeit gewährleistet werden.

In einer besonders bevorzugten Weiterbildung kann das Strömungsprofil in gedrucktem und ausgehärtetem Zustand zumindest einen Anteil eines Metallwerkstoffs aufweisen. Durch den Einsatz eines Metallwerkstoffs wird vorteilhaft die mechanische Stabilität erhöht und die elektrische Leitfähigkeit des Strömungsprofils nennenswert verbessert.

In einer weiter bevorzugten Ausgestaltung kann das Strömungsprofil in gedrucktem und ausgehärtetem Zustand zumindest einen Anteil eines Graphitwerkstoffs aufweisen. Durch den Einsatz eines Graphitwerkstoffs wird vorteilhaft die mechanische Stabilität verbessert und die elektrische Leitfähigkeit des Strömungsprofils kann nennenswert erhöht werden. Die Eigenschaften des Strömungsprofils unterscheiden sich damit nur in verhältnismäßig geringem Umfang von den Eigenschaften der Graphitfolie.

Nach einer noch weiter bevorzugten Ausgestaltung kann das Strömungsprofil aus einer Druckpaste mit einem Massenanteil an Aluminiumnitrid und/oder Aluminiumoxid von mehr als 50 %, bevorzugt von mehr als 55 %, weiter bevorzugt von mehr als 60 %, noch weiter bevorzugt von mehr als 65 %, noch weiter bevorzugt von mehr als 70 %, noch weiter bevorzugt von mehr als 75 % erzeugt sein. Durch einen derartigen Massenanteil an Aluminiumnitrid und/oder Aluminiumoxid wird eine verhältnismäßig hohe mechanische Stabilität bei einer kontrolliert beeinflussten elektrischen Leitfähigkeit des Strömungsprofils ermöglicht. Ebenso kann durch einen solchen Massenanteil eines Keramikwerkstoffs eine hohe Druckfestigkeit sowie eine hohe Härte und zusätzlich auch eine hohe Korrosions- und Verschleißbeständigkeit gewährleistet werden.

Besonders bevorzugt kann das Strömungsprofil aus einer Druckpaste mit einem Massenanteil an Aluminiumnitrid und/oder Aluminiumoxid von weniger als 90 %, bevorzugt von weniger als 85 %, weiter bevorzugt von weniger als 80 % erzeugt ist. Durch einen Einsatz von Aluminiumnitrid und/oder Aluminiumoxid mit einem solchen Massenanteil wird eine Mindestelastizität des Strömungsprofils sichergestellt und damit die Gefahr von Beschädigungen verringert. Gleichzeitig wird eine additive Fertigung, insbesondere im Wege des 3D-Siebdrucks, vereinfacht.

Darüber hinaus kann das Strömungsprofil aus einer durch Ultraviolettlicht aushärtenden Druckpaste erzeugt sein, die vor Aushärtung neben einem Feststoff zumindest einen Zusatzstoff oder eine Mehrzahl von Zusatzstoffen aufweist. Auf diese Weise lassen sich die Eigenschaften des Strömungsprofils vorteilhaft an den Einsatzzweck und auch an die Verarbeitbarkeit im Wege der additiven Fertigung, insbesondere im Wege des 3D-Siebdrucks, anpassen.

In einer sehr vorteilhaften Weiterbildung der Bipolarplatte ist vorgesehen, dass das Strömungsprofil aus einer durch Ultraviolettlicht aushärtenden Druckpaste mit erzeugt ist, die vor Aushärtung als Zusatzstoff ein Tertiobutyl Cyclohexyl Acrylat und/oder ein Polyethylen Glycol (200) Diacrylat und/oder ein aliphatisches Urethan-Acrylat und/oder eine Harnstofflösung aufweist.

Der Zusatzstoff Tertiobutyl Cyclohexyl Acrylat eignet sich besonders vorteilhaft als Haftvermittler und begünstigt somit insbesondere den Gefügezusammenhalt des Strömungsprofils und/oder die Verbindung zwischen Strömungsprofil und der Tragstruktur. Zudem eignet sich Tertiobutyl Cyclohexyl Acrylat insbesondere für Druckpasten, die durch den Einsatz von Ultraviolettlicht ausgehärtet werden sollen.

Durch den Einsatz von Polyethylen Glycol (200) Diacrylat lässt sich vorteilhaft die Elastizität des Strömungsprofils für den jeweiligen Einsatzzweck verbessern und somit eine Gefahr von Beschädigungen reduzieren.

Durch den Einsatz eines aliphatisches Urethan-Acrylats lässt sich in der additiven Fertigung das Aushärten gedruckter Schichten begünstigen. Zudem kann vor dem Aushärten durch diesen Zusatzstoff eine niedrige Viskosität der Druckpaste gewährleistet und die Verarbeitbarkeit im Wege des 3D-Siebdrucks verbessert werden. Ferner werden durch den Einsatz eines aliphatisches Urethan-Acrylats die mechanische Stabilität des Strömungsprofils und auch die Korrosionsbeständigkeit vorteilhaft verbessert.

Der Einsatz einer Harnstofflösung ist mit nur geringem Kostenaufwand verbunden und ermöglicht eine schnelle Aushärtung der jeweiligen Druckpaste. Es ergibt sich somit die Möglichkeit einer effizienten um kostengünstigen Fertigung. Zudem lassen sich durch den Zusatz einer Harnstofflösung besonders beständige Schichten im Wege des 3D-Siebdrucks aufbauen.

In einer vorteilhaften Ausführungsform der Erfindung kann das Strömungsprofil aus einer durch Ultraviolettlicht aushärtenden Druckpaste erzeugt sein, die vor Aushärtung die folgenden Bestandteile in Massenprozent enthält:

- Aluminiumnitrid: 75 % bis 80 %
- Polyethylen Glycol (200) Diacrylat: 10 % bis 15 %
- Aliphatisches Urethan-Acrylat: 7 % bis 10 %
- Tertiobutyl Cyclohexyl Acrylat: 0,5 % bis 2 %
- Harnstofflösung: 0,5 % bis 2 %
- Rest unvermeidbare Verunreinigungen.

Durch die Verwendung einer solchen Druckpaste bei der Herstellung kann auf der Graphitfolie ein mechanisch hochstabiles Strömungsprofil erzeugt sein, das zudem verhältnismäßig gute wärmeleitende Eigenschaften aufweist und mit nur geringem Aufwand zu fertigen ist.

In einer weiteren vorteilhaften Ausgestaltung der Bipolarplatte kann das Strömungsprofil aus einer lösungsmittelbasierten Druckpaste erzeugt sein, die vor Aushärtung neben einem Feststoff zumindest einen Zusatzstoff oder eine Mehrzahl von Zusatzstoffen aufweist. Durch den Einsatz von Zusatzstoffen können die Eigenschaften des Strömungsprofils vorteilhaft an den Einsatzzweck angepasst und gleichzeitig die Herstellung im Wege der additiven Fertigung, insbesondere im Wege des 3D-Siebdrucks, begünstigt werden.

Gemäß einer bevorzugten Weiterbildung kann das Strömungsprofil aus einer lösungsmittelbasierten Druckpaste erzeugt sein, die vor Aushärtung als Zusatzstoff zumindest ein Lösungsmittel, insbesondere ein organisches Lösungsmittel, bevorzugt Dipropylen Glycol Methyl Ether (DPGME), und/oder Polyvinylbutyral und/oder ein Dispergier- und/oder Netzadditiv, bevorzugt Polyglykolester, und/oder ein rheologisches Additiv aufweist.

Insgesamt kann auf diese Weise ein Strömungsprofil in vorteilhafter Weise durch additive Fertigung, insbesondere durch 3D-Siebdruck, mit nur geringem Aufwand und hoher Fertigungsgenauigkeit erzeugt und gleichzeitig eine beständige und langlebige Formgebung des Strömungsprofils gewährleistet werden.

Dipropylen Glycol Methyl Ether (DPGME) eignet sich in besonders vorteilhafter Weise als Lösungsmittel für eine in der Fertigung des Strömungsprofils einzusetzende Druckpaste. Insbesondere lassen sich durch ein solches Lösungsmittel die jeweiligen Feststoffe, insbesondere das Grafitpulver, geeignet lösen beziehungsweise verdünnen, ohne dass eine unerwünschte chemische Reaktion mit dem jeweiligen Feststoff ausgelöst wird.

Durch den Zusatz von Polyvinylbutyral ergibt sich ferner eine noch bessere Verarbeitbarkeit der Druckpaste im Wege des 3D-Siebdrucks.

Durch den Zusatz eines Dispergier- und/oder Netzadditivs, bevorzugt eines Polyglykolesters, kann ferner eine besonders feinteilige und gleichmäßige Verteilung von Feststoffpartikeln in einer Druckpaste erzeugt werden und eine Langzeitstabilität der Druckpaste wird sichergestellt. Es ergibt sich eine verbesserte Verarbeitbarkeit sowie effizientere Fertigung.

Durch die Zugabe eines rheologischen Additivs kann das Fließverhalten der Druckpaste gezielt beeinflusst und damit die Fertigung im Wege des 3D-Siebdrucks begünstigt werden. Insbesondere kann ein rheologisches Additiv zur Erzeugung eines thixotropen Fließverhaltens als Zusatzstoff verwendet werden.

In einer ferner bevorzugten Weiterbildung der Erfindung kann das Strömungsprofil aus einer lösungsmittelbasierten Druckpaste erzeugt sein, die vor Aushärtung die folgenden Bestandteile in Massenprozent enthält:

- Graphit: 35% bis 45 %
- Dipropylen Glycol Methyl Ether: 40 % bis 45 %
- Polyvinylbutyral: 4 % bis 6 %
- Polyglykolester: 4 % bis 6 %
- rheologisches Additiv: 0,5 % bis 2 %
- Rest unvermeidbare Verunreinigungen.

Durch die Verwendung einer solchen Druckpaste bei der Herstellung kann auf der Graphitfolie ein mechanisch hochstabiles Strömungsprofil erzeugt sein, das zudem vorteilhaft sehr gute wärmeleitende Eigenschaften aufweist und mit geringem Aufwand mittels additiver Fertigung, insbesondere mittels 3D-Siebdrucks, herstellbar ist.

Ein weiterer unabhängiger Aspekt der vorliegenden Erfindung betrifft eine Elektrodenplatte, insbesondere für einen Brennstoffzellenstapel, mit einer elektrisch leitfähigen Tragstruktur und mit einem auf der Tragstruktur ausgebildeten Strömungsprofil zur Fluidführung. Die Tragstruktur weist eine Graphitfolie auf und/oder ist als Graphitfolie ausgebildet. Elektrodenplatten können beispielsweise als Bipolarplatten oder auch als sogenannte Endplatten ausgebildet sein und in einem Brennstoffzellenstapel eingesetzt werden. Durch die Ausbildung der Tragstruktur als Graphitfolie oder mit einer Graphitfolie wird eine besonders gute elektrische Leitfähigkeit und eine hohe mechanische Stabilität der Elektrodenplatte erreicht. Zudem lässt sich eine solche Elektrodenplatte mit nur geringem Fertigungsaufwand herstellen und gewährleistet ein hohes Maß an Betriebssicherheit.

Auf einer solchen Elektrodenplatte kann in vorteilhafter Weise einseitig ein Strömungsprofil vorgesehen sein. Die jeweils andere Seite der Elektrodenplatte kann frei von einem Strömungsprofil sein. Bei einer solchen Ausgestaltung kann es sich um eine als Endplatte ausgebildete Elektrodenplatte handeln und die Fertigung wird aufgrund des nur einseitig vorgesehenen Strömungsprofils vereinfacht. Die Elektrodenplatte kann in vorteilhafter Weise einseitig mit einem der oben angegebenen Materialen zur Erzeugung des Strömungsprofils bedruckt sein. Dadurch kann eine kostengünstige, aber vorteilhaft dennoch sehr leistungsfähige, insbesondere sehr gut wärmeleitfähige Endplatte bereitgestellt werden.

Ein noch weiterer unabhängiger Aspekt der vorliegenden Erfindung betrifft einen Brennstoffzellenstapel zur Erzeugung von elektrischem Strom, mit einer Mehrzahl von voranstehend beschriebenen Bipolarplatten und/oder mit einer Mehrzahl von voranstehend beschriebenen Elektrodenplatten.

Ein noch weiterer unabhängiger Aspekt der vorliegenden Erfindung betrifft ein Verfahren zur Herstellung einer Bipolarplatte, insbesondere voranstehend beschriebenen Bipolarplatten, bei dem als Tragstruktur eine Graphitfolie bereitgestellt wird, bei dem auf die Graphitfolie ein Strömungsprofil zur Fluidführung mittels additiver Fertigung, insbesondere mittels eines 3D-Siebdruckverfahrens, aufgedruckt wird. Dadurch wird ein Verfahren geschaffen, mit dem auf einfache und kostengünstige Weise eine Elektrodenplatte, insbesondere eine Bipolarplatte und/oder Endplatte, hergestellt werden kann, die zudem eine komplexe Formgebung aufweist und eine hohe Betriebssicherheit gewährleistet.

Besonders bevorzugt können in einer bevorzugten Weiterbildung des Verfahren nacheinander beide Seiten der Graphitfolie mit einem Strömungsprofil bedruckt werden. Hierdurch kann auf besonders einfache Weise und ohne zusätzliche Produktionsmittel jeweils ein Strömungsprofil auf den beiden Seiten der Graphitfolie vorgesehen werden.

Darüber hinaus kann in einer Weiterbildung des Verfahrens eine erste Seite der Graphitfolie mit einem Strömungsprofil bedruckt werden. Anschließend kann die bereits einseitig bedruckte Graphitfolie gewendet werden. Nach dem Wenden kann eine zweite Seite der Graphitfolie mit einem Strömungsprofil bedruckt werden. Dies kann mit nur geringem Handhabungsaufwand bewerkstelligt werden.

In einer weiter vorteilhaften Ausgestaltung des Verfahrens kann vorgesehen sein, dass bei dem Bedrucken der ersten Seite der Graphitfolie eine andere Druckpaste verwendet wird als bei dem Bedrucken der zweiten Seite der Graphitfolie. Dadurch lassen sich auf einfache Weise unterschiedliche Eigenschaften der Strömungsprofile auf der Anodenseite einerseits und der Kathodenseite andererseits ausprägen.

Schließlich kann in einer vorteilhaften Ausführungsform des Verfahrens das aufgedruckte Strömungsprofil ausgehärtet werden, insbesondere frei von Sinterung ausgehärtet werden. Durch die Vermeidung einer Sinterung und damit von hohen Prozesstemperaturen verringert sich die thermische Beanspruchung der Graphitfolie. Die Zuverlässigkeit des Verfahrens zur Herstellung der Bipolarplatte lässt sich auf diese Weise verbessern.

Nachfolgend werden weitere vorteilhafte Ausgestaltungen einer Druckpaste zur Herstellung des Strömungsprofils der Bipolarplatte beschrieben. Die Spezifizierung der jeweiligen Druckpaste bezieht sich dabei jeweils auf den Zustand vor einer Aushärtung. Das Strömungsprofil der Bipolarplatte kann in bevorzugter Weise aus einer nachfolgend beschriebenen Druckpaste erzeugt sein.

Eine bevorzugte Druckpaste weist wenigstens einen Feststoff, wenigstens ein Lösungsmittel und wenigsten ein Rheologie-Additiv auf, wobei der Feststoff wenigstens einen Graphitwerkstoff aufweist und wobei der Massenanteil des Feststoffs mindestens 25 % beträgt.

Durch das bevorzugt vorgesehene Rheologie-Additiv lassen sich die rheologischen Eigenschaften der Druckpaste gezielt beeinflussen. Insbesondere kann durch die Zugabe eines Rheologie-Additivs ein unerwünschtes zerfließen der Druckpaste nach erfolgtem Druck vermieden werden, sodass eine ausreichend hohe Druckpräzision sichergestellt werden kann. Gleichzeitig kann trotz der Zugabe eines Rheologie-Additivs ermöglicht werden, dass eine ausreichende Benetzung eines Drucksiebs ohne Verklebung oder zu starke Verdickung erfolgt.

Schließlich kann ein verhältnismäßig hoher Feststoffanteil von mindestens Gew.-25 % besonders gute mechanische Eigenschaften der jeweils gedruckten Strömungsprofile gewährleisten. Gleichzeitig kann mit einem hohen Feststoffanteil eine hohe Druckpräzision begünstigt werden. Schließlich kann ein derart hoher Feststoffanteil eine verhältnismäßig einfache beziehungsweise effiziente Entbindung zur Folge haben und unerwünschte Schrumpfungen vor, während und/oder nach einer Aushärtung und/oder Sinterung können vermieden werden.

Gemäß einer bevorzugten Ausgestaltung kann der Feststoff in Pulverform erzeugt und/oder eingemischt sein. Ebenso kann der Feststoff aus Pulvermaterial bestehen und/oder der Feststoff kann aus einem Graphit in Pulverform erzeugt sein oder bestehen. Ein derartiger Feststoff lässt sich mit nur verhältnismäßig geringem Aufwand bereitstellen und gleichmäßig innerhalb der Druckpaste verteilen, sodass im Ergebnis eine hohe Druckgüte erzielt werden kann.

Gemäß einer weiter bevorzugten Ausgestaltung kann der Massenanteil des Feststoffs mehr als 27 %, bevorzugt mehr als 28 %, weiter bevorzugt mehr als 30 %, noch weiter bevorzugt mehr als 32 %, noch weiter bevorzugt mehr als 35 %, noch weiter bevorzugt von mehr als 45 %, noch weiter bevorzugt von mehr als 50 %, noch weiter bevorzugt von mehr als 55 %, noch weiter bevorzugt von mehr als 65 %, noch weiter bevorzugt von mehr als 75 %, betragen. Auf diese Weise lassen sich die mechanischen Eigenschaften und/oder die Druckpräzision weiter verbessern. Zudem kann auf diese Weise eine weiter vereinfachte Entbindung gewährleistet und eine unerwünschte Schrumpfung vor, während und/oder nach einer Aushärtung und/oder Sinterung in weiter verbesserter Weise vermieden werden.

Gemäß einer noch weiter bevorzugten Ausgestaltung kann der Massenanteil des Feststoffs weniger als 90 %, bevorzugt weniger als 85 %, weiter bevorzugt weniger als 80 %, weiter bevorzugt weniger als 70 %, weiter bevorzugt weniger als 60 %, weiter bevorzugt weniger als 50 %, weiter bevorzugt weniger als 45 %, betragen. Hierdurch lässt sich eine gute Druckbarkeit sicherstellen, insbesondere ausreichend flüssige Eigenschaften der Druckpaste, durch die eine Druck durch ein Drucksieb hindurch ermöglicht werden kann.

Gemäß einer noch weiter bevorzugten Ausgestaltung kann das Lösungsmittel ein organisches Lösungsmittel und/oder Glykolehter sein oder aufweisen, insbesondere Dipropylenglycolmethylether und/oder Dipropylenglykolmonomethylether. Ein solches Lösungsmittel hat sich als Bestandteil einer Druckpaste für den Einsatz im dreidimensionalen Siebdruckverfahren als besonders vorteilhaft erwiesen. Es kann eine geeignete Verdünnung des jeweiligen Feststoffs ohne Beeinträchtigung der mechanischen Eigenschaften des Feststoffs nach Aushärtung sichergestellt werden.

Gemäß einer noch weiter bevorzugten Ausgestaltung kann der Massenanteil an Lösungsmittel wenigstens 25 % betragen, bevorzugt mehr als 30 %, weiter bevorzugt mehr als 35 %, weiter bevorzugt mehr als 40 %, weiter bevorzugt mehr als 42 %. Ein Lösungsmittel in einer solchen Menge lässt sich nach erfolgtem Druck mit verhältnismäßig geringem Aufwand durch eine Entbinderung wieder entfernen und gewährleistet gleichzeitig eine ausreichende Verdünnung.

Gemäß einer noch weiter bevorzugten Ausgestaltung kann der Massenanteil an gesondertem Lösungsmittel weniger als 70 % beträgt, bevorzugt weniger als 60 %, weiter bevorzugt weniger als 50 %, weiter bevorzugt weniger als 45 %. Hierdurch können die Fließeigenschaften in besonders vorteilhafter begünstigt werden, insbesondere eine zu starke Fließfähigkeit vermieden werden.

Gemäß einer noch weiter bevorzugten Ausgestaltung kann die Druckpaste zumindest ein Dispergier-Additiv aufweisen. Durch den Einsatz eines solchen Dispergier-Additivs kann ein besonders hoher Feststoffanteil in der Druckpaste realisiert werden. Es lässt sich eine besonders gleichmäßige Vermischung des jeweiligen Feststoffs in der Druckpaste sicherstellen und dadurch eine hohe Druckqualität gewährleisten.

Gemäß einer noch weiter bevorzugten Ausgestaltung kann das Dispergier-Additiv ein Netz- und Dispergier-Additiv sein oder ausschließlich als Dispergier-Additiv wirken. Durch ein Netz- und Dispergier-Additiv kann in besonders bevorzugter Weise eine auch eine gute Benutzung der Druckpaste sichergestellt werden, insbesondere, insbesondere ohne, dass in einem Drucksieb oder nach dem Druck nicht-benetzte Bereiche oder trockene Stellen entstehen oder übrigbleiben. Eine Ausgestaltung als ausschließliches Dispergier-Additiv kann mit geringem Aufwand und zu verringerten Kosten bereitgestellt werden.

Gemäß einer noch weiter bevorzugten Ausgestaltung kann das Dispergier-Additiv Polyglykolester aufweisen und/oder sein. Durch den Zusatz eines Dispergier-Additivs beziehungsweise eines Dispergier- und/oder der Netzadditivs in Form eines Polyglykolesters kann ferner eine besonders feinteilige und gleichmäßige Verteilung von Feststoffpartikeln in einer Druckpaste erzeugt werden und eine Langzeitstabilität der Druckpaste wird sichergestellt. Es ergibt sich eine verbesserte Verarbeitbarkeit sowie effizientere Fertigung.

Gemäß einer noch weiter bevorzugten Ausgestaltung kann das Dispergier-Additiv einen Massenanteil der Wirksubstanz von mindestens 20 % und/oder von weniger als 40 % aufweisen, insbesondere von 30 % oder etwa 30 %. Ebenso kann das Dispergier-Additiv einen Massenanteil der Wirksubstanz von mindestens 50 %, mindestens 60%, mindestens 70%, mindestens 80%, mindestens 90% oder 100% oder etwa 100% aufweisen. Ein solches Dispergier-Additiv kann mithin eine geringe Konzentration aufweisen und damit präzise dosiert werden. Ebenso kann eine hohe Konzentration vorgesehen sein, sodass durch Zugabe des Dispergier-Additivs eine nur geringe Verdünnung der Druckpaste einhergeht.

Gemäß einer noch weiter bevorzugten Ausgestaltung kann der Massenanteil des Dispergier-Additivs wenigstens 0,5 % betragen, bevorzugt mehr als 0,5 %, weiter bevorzugt mehr als 0,6 %, weiter bevorzugt mehr als 0,7 %, weiter bevorzugt mehr als 0,8 %, weiter bevorzugt mehr als 0,9 %, weiter bevorzugt etwa 1 %, weiter bevorzugt mehr als 2 %, weiter bevorzugt mehr als 3 %, weiter bevorzugt mehr als 4 %, weiter bevorzugt mehr als 5 %. Ein solcher Massenanteil kann eine ausreichende Vermischung und Benetzung bei gleichzeitig geringer Beeinträchtigung der Gesamtzusammensetzung der Druckpaste gewährleisten.

Gemäß einer noch weiter bevorzugten Ausgestaltung kann der Massenanteil des Dispergier-Additivs weniger als 10 % betragen, bevorzugt weniger als 8 %, bevorzugt weniger als 7 %, bevorzugt weniger als 6 %, bevorzugt weniger als 5 %, bevorzugt weniger als 4 %, bevorzugt weniger als 1,5 %, weiter bevorzugt weniger als 1,2 %, weiter bevorzugt weniger als 1,1 %. Durch eine derartige Begrenzung des Dispergier-Additivs können weitere Bestandteile der Druckpaste in verhältnismäßig hohen Massenanteilen vorgesehen sein, insbesondere ein hoher Massenanteil des Feststoffs.

Gemäß einer noch weiter bevorzugten Ausgestaltung kann die Druckpaste eine Mehrzahl von unterschiedlichen Rheologie-Additiven aufweisen. Die rheologischen Eigenschaften können auf diese Weise besonders vorteilhaft eingestellt sein, insbesondere im Hinblick auf die weiteren Bestandteile der Druckpaste sowie deren Massenanteile.

Gemäß einer noch weiter bevorzugten Ausgestaltung kann das wenigstens eine Rheologie-Additiv eine flüssige Substanz sein und/oder in flüssiger Form eingemischt sein. Auf diese Weise kann die Druckpaste mit nur geringem Aufwand hergestellt und beispielsweise für einen dreidimensionalen Siebdruckvorgang zur Verfügung gestellt werden.

Gemäß einer noch weiter bevorzugten Ausgestaltung kann das wenigstens eine Rheologie-Additiv eine pulverförmige Substanz und/oder in Pulverform eingemischt sein. Ebenso kann das wenigstens eine Rheologie-Additiv Zellulose aufweisen und/oder aus Zellulose bestehen. Dies kann kostengünstig bewerkstelligt werden und eine einfache Lagerung für die spätere Herstellung der Druckpaste ermöglichen.

Gemäß einer noch weiter bevorzugten Ausgestaltung kann das wenigstens eine Rheologie-Additiv zur Erzeugung eines thixotropen Fließverhaltens ausgebildet sein. Das Fließverhalten während des Drucks kann hierdurch begünstigt werden und gleichzeitig ein unerwünschtes Zerfließen nach oder vor dem Druck verhindert werden. Der dreidimensionale Siebdruck mit einer solchen Druckpaste kann hierdurch begünstigt und eine hohe Druckpräzision erzielt werden.

Gemäß einer noch weiter bevorzugten Ausgestaltung kann das wenigstens eine Rheologie-Additiv für mittelpolare lösemittelhaltige und/oder lösemittelfreie Systeme ausgebildet sein. Das Rheologie-Additiv kann mithin insbesondere für mittelpolare lösemittelhaltige und/oder lösemittelfreie Systeme eingesetzt werden, wodurch für ein solches System eine besonders hohe Funktionalität gewährleistet wird.

Gemäß einer noch weiter bevorzugten Ausgestaltung kann das wenigstens eine Rheologie-Additiv für hochpolare oder niedrigpolare lösemittelhaltige und/oder lösemittelfreie Systeme ausgebildet sein. Das Rheologie-Additiv kann mithin insbesondere für hochpolare oder niedrigpolare lösemittelhaltige und/oder lösemittelfreie Systeme eingesetzt werden, wodurch für ein solches System eine besonders hohe Funktionalität gewährleistet wird.

Gemäß einer noch weiter bevorzugten Ausgestaltung kann das wenigstens eine Rheologie-Additiv als Lösung eines modifizierten Harnstoffs ausgebildet sein. Ein solches Rheologie-Additiv kann besonders kostengünstig bereitgestellt werden und damit eine wirtschaftliche Fertigung gewährleisten. Ein solches Additiv baut nach dem Einrühren in die Druckpaste insbesondere eine dreidimensionale Netzwerkstruktur auf. Ein resultierendes thixotrope Fließverhalten ist besonders vorteilhaft zur Vermeidung von Bodensatzbildung und zur Erhöhung des Standvermögens geeignet. Der Verlauf der Druckpaste wird dabei nicht oder kaum verschlechtert.

Gemäß einer noch weiter bevorzugten Ausgestaltung kann das wenigstens eine Rheologie-Additiv als Lösungsmittel Dimethylsulfoxid aufweisen. Ein solches Lösungsmittel gewährleistet eine geeignete Verdünnung des Additivs, ohne die Wirksamkeit zur Beeinflussung des Fließverhaltens negativ zu beeinflussen.

Gemäß einer noch weiter bevorzugten Ausgestaltung kann das wenigstens eine Rheologie-Additiv als Lösungsmittel Amidether aufweisen. Ein solches Lösungsmittel gewährleistet ebenfalls eine geeignete Verdünnung des Additivs, ohne die Wirksamkeit zur Beeinflussung des Fließverhaltens negativ zu beeinflussen.

Gemäß einer noch weiter bevorzugten Ausgestaltung kann das Rheologie-Additiv einen Massenanteil der Wirksubstanz von mindestens 20 % aufweisen, bevorzugt von mehr als 20 %, weiter bevorzugt von mehr als 30 %, weiter bevorzugt von mehr als 40% oder von 40%, weiter bevorzugt von mehr als 50% oder von 50% oder von 52%. Durch einen solchen Mindestanteil der Wirksamkeit kann bereits mit einer verhältnismäßig geringen Zugabe eine ausreichende rheologische Wirkung erzielt werden.

Gemäß einer noch weiter bevorzugten Ausgestaltung kann das Rheologie-Additiv einen Massenanteil der Wirksubstanz von weniger als 70 % aufweisen, insbesondere von weniger als 60 % oder von weniger als 55 %. Dies erlaubt eine besonders präzise Dosierung der Wirksubstanz und eine insgesamt geringe Beeinflussung der Massenanteile der weiteren Bestandteile der Druckpaste.

Gemäß einer noch weiter bevorzugten Ausgestaltung kann die Druckpaste einen Mindestbestandteil an einem Bindemittel und/oder Polyvinylbutyral als Bindemittel aufweisen. Durch den Zusatz eines Bindemittels und/oder Polyvinylbutyral als Bindemittel ergibt sich ferner eine noch bessere Verarbeitbarkeit der Druckpaste im Wege des dreidimensionalen Siebdrucks.

Gemäß einer noch weiter bevorzugten Ausgestaltung kann der Massenanteil an Bindemittel und/oder Polyvinylbutyral wenigstens 1 % betragen, bevorzugt mehr als 2 %, mehr als 3 % oder mehr als 4 % oder mehr als 5 %. Durch den Zusatz eines Bindemittels und/oder Polyvinylbutyral als Bindemittel in einer derartigen Mindestmenge ergibt sich eine besonders gute Verarbeitbarkeit der Druckpaste im Wege des dreidimensionalen Siebdrucks.

Gemäß einer noch weiter bevorzugten Ausgestaltung kann der Massenanteil an Bindemittel und/oder Polyvinylbutyral weniger als 6 % betragen, bevorzugt weniger als 5 %, weniger als 4,5 % oder weniger als 4 % oder weniger als 3 %. Durch den Zusatz eines Bindemittels und/oder Polyvinylbutyral als Bindemittel in einer derartigen Höchstmenge ergibt sich eine insgesamt besonders geeignete Verarbeitbarkeit der Druckpaste im Wege des dreidimensionalen Siebdrucks.

Gemäß einer noch weiter bevorzugten Ausgestaltung kann die Druckpaste die folgenden Bestandteile in Massenprozent aufweisen:

- Graphit als Feststoff: 35 % bis 45 %
- Lösungsmittel: 40 % bis 45 %
- Bindemittel: 4 % bis 6 %
- Dispergier-Additiv(e): 4 % bis 6 %
- rheologische(s) Additiv(e): 0,5 % bis 2 %
- Rest unvermeidbare Verunreinigungen

Eine solche Druckpaste eignet sich in besonders vorteilhafter Weise für die Herstellung des Strömungsprofils. Es kann eine gute Druck-barkeit im Wege des dreidimensionalen Siebdrucks und mit nur verhältnismäßig geringem Aufwand eine Aushärtung bewerkstelligt werden. Mit einer solchen Druckpaste lassen sich hohe Qualitätseigenschaften, insbesondere hoher Fertigungsgenauigkeit und guten mechanischen Eigenschaften, erzielen.

Gemäß einer noch weiter bevorzugten Ausgestaltung kann die Druckpaste die folgenden Bestandteile in Massenprozent aufweisen:

- Graphit als Feststoff: 35% bis 45 %
- Dipropylenglycolmethylether: 40 % bis 45 %
- Polyvinylbutyral: 4 % bis 6 %
- Polyglykolester: 4 % bis 6 %
- rheologische(s) Additiv(e): 0,5 % bis 2 %
- Rest unvermeidbare Verunreinigungen

Nachfolgend werden noch weitere vorteilhafte Ausgestaltungen einer Druckpaste zur Herstellung des Strömungsprofils der Bipolarplatte beschrieben. Die Spezifizierung der jeweiligen Druckpaste bezieht sich dabei jeweils wiederum auf den Zustand vor einer Aushärtung. Das Strömungsprofil der Bipolarplatte kann in bevorzugter Weise aus einer nachfolgend beschriebenen Druckpaste erzeugt sein.

Eine bevorzugte Druckpaste weist einen Feststoff, wenigstens einen Monomer, einen Photoinitiator und wenigstens ein Rheologie-Additiv auf. Dabei weist der Feststoff wenigstens einen Keramikwerkstoff und/oder wenigstens einen Nichtmetallwerkstoff auf und der Massenanteil des Feststoffs beträgt mindestens 50 %.

Durch einen bevorzugt vorgesehenen Photoinitiator kann mit nur geringem Aufwand eine Aushärtung der Druckpaste nach erfolgtem Druck bewerkstelligt werden. Insbesondere kann durch einen Photoinitiator mit nur verhältnismäßig geringem Energieaufwand und relativ kurzer Verfahrensdauer die Aushärtung einer gedruckten Schicht realisiert werden.

Bei einem Photoinitiator handelt es sich insbesondere um eine chemische Verbindung, die nach Absorption von Licht, insbesondere von Ultraviolettlicht, in einer Photolyse-Reaktion zerfällt und reaktive Spezies bildet. Hierdurch kann eine Reaktion initiiert werden, bei der er sich insbesondere um eine Polymerisation handeln kann. Es kann sich mithin um eine Polymerisationsreaktion handeln. Eine solche Polymerisationsreaktion ist insbesondere eine Kettenreaktion, bei der Monomere zu Polymeren verknüpft werden. Die Monomere besitzen Mehrfachbindungen, an denen Radikale angreifen. Diese Mehrfachbindungen lösen sich auf und die Monomere werden aneinandergebunden. Eine solche Reaktion kann durch einen Photoinitiator mit nur geringem Aufwand initiiert werden und ermöglicht eine Aushärtung in nur kurzer Verfahrensdauer.

Die Erzeugung des Strömungsprofils kann auf diese Weise in signifikant verkürzter Produktionsdauer erzielt werden. Zudem kann eine Aushärtung mittels eines Photoinitiators mit verringertem Wärmeeintrag und damit geringerer thermischer Beanspruchung des gedruckten Werkstoffs erfolgen. Gleichzeit kann der anlagentechnische Aufwand reduziert werden, da eine gesonderte thermische Trocknung, insbesondere in einem Trocknungsofen, vermieden werden kann.

Durch das erfindungsgemäß vorgesehene Rheologie-Additiv lassen sich zudem die rheologischen Eigenschaften der Druckpaste gezielt beeinflussen. Insbesondere kann durch die Zugabe eines Rheologie-Additivs ein unerwünschtes Zerflie-ßen der Druckpaste nach erfolgtem Druck vermieden werden, sodass eine ausreichend hohe Druckpräzision sichergestellt werden kann. Mittels der Zugabe eines Rheologie-Additivs kann ferner ermöglicht werden, dass eine ausreichende Benetzung eines Drucksiebs erfolgt, ohne dass dieses verklebt beziehungsweise verstopft. Durch das Rheologie-Additiv kann eine zu starke Verdickung gezielt verhindert werden.

Schließlich kann ein verhältnismäßig hoher Feststoffanteil von mindestens 50 Gew.-% besonders gute mechanische Eigenschaften der jeweils gedruckten Strömungsprofile gewährleisten. Gleichzeitig kann mit einem hohen Feststoffanteil eine hohe Druckpräzision begünstigt werden. Schließlich kann durch einen derart hohen Feststoffanteil eine vereinfachte Entbinderung gewährleistet und eine unerwünschte Schrumpfung vor, während und/oder nach einer Aushärtung und/oder Sinterung vermieden werden.

Insgesamt kann auf diese Weise eine hohe Werkstückqualität gewährleistet werden, bei gleichzeitig guter Druckbarkeit und effizienter Verfahrensführung.

Gemäß einer bevorzugten Ausgestaltung der Druckpaste kann der Feststoff eine Oxidkeramik und/oder eine Nicht-Oxidkeramik aufweisen. Ferner kann der Feststoff Aluminiumnitrid und/oder Aluminiumoxid und/oder Zirconiumdioxid und/oder Graphit aufweisen. Durch derartige Werkstoffe lassen sich Strömungsprofile von hoher Qualitätsgüte erzeugen.

Gemäß einer weiter bevorzugten Ausgestaltung kann der Feststoff in Pulverform erzeugt und/oder eingemischt sein und/oder dass der Feststoff kann aus Pulvermaterial bestehen. Ferner kann der Feststoff aus einem Keramikpulver, insbesondere Aluminiumnitrid und/oder Aluminiumoxid und/oder Zirconiumdioxid und/oder Graphit in Pulverform, erzeugt sein und/oder bestehen. Ein derartiger Feststoff lässt sich mit nur verhältnismäßig geringem Aufwand bereitstellen und gleichmäßig innerhalb der Druckpaste verteilen, sodass im Ergebnis eine hohe Druckgüte erzielt werden kann.

Gemäß einer weiter bevorzugten Ausgestaltung kann der Massenanteil des Feststoffs und/oder des wenigstens einen Keramikwerkstoffs und/oder des Aluminiumnitrids und/oder Aluminiumoxids mehr als 50 % betragen, bevorzugt mehr als 55 %, weiter bevorzugt mehr als 60 %, noch weiter bevorzugt mehr als 65 %, noch weiter bevorzugt mehr als 70 %, noch weiter bevorzugt von mehr als 75 %. Auf diese Weise lassen sich die mechanischen Eigenschaften der jeweils gedruckten Strömungsprofile und/oder die Druckpräzision weiter verbessern. Zudem kann auf diese Weise eine weiter vereinfachte Entbinderung gewährleistet und eine unerwünschte Schrumpfung vor, während und/oder nach einer Aushärtung und/oder Sinterung in weiter verbesserter Weise vermieden werden.

Gemäß einer noch weiter bevorzugten Ausgestaltung kann der Massenanteil des Feststoffs und/oder des wenigstens einen Keramikwerkstoffs und/oder des Aluminiumnitrids und/oder Aluminiumoxids weniger als 90 % betragen, bevorzugt weniger als 85 %, weiter bevorzugt weniger als 80 % betragen. Hierdurch lässt sich eine gute Druckbarkeit sicherstellen, insbesondere ausreichend flüssige Eigenschaften der Druckpaste, durch die eine Druck durch ein Drucksieb hindurch ermöglicht werden kann.

Gemäß einer noch weiter bevorzugten Ausgestaltung kann der Photoinitiator zur Erzeugung und/oder Initiierung einer Photopolymerisation ausgebildet sein, insbesondere durch Absorption von sichtbarem oder ultraviolettem Licht initiiert. Ebenso kann der Photoinitiator zur Erzeugung und/oder Initiierung einer UV-basierten Härtung ausgebildet sein. Durch einen solchen Photoinitiator kann mit besonders geringem Aufwand und nur kurzer Verfahrensdauer eine geeignete Aushärtung der Druckpaste erzielt werden. Zudem kann ein solcher Photoinitiator kostengünstig bereitgestellt werden und ermöglicht damit eine besonders wirtschaftliche Fertigung.

Gemäß einer noch weiter bevorzugten Ausgestaltung kann der Photoinitiator dazu ausgebildet sein, nach Absorption von sichtbarem oder ultraviolettem Licht in einer Photolyse-Reaktion zu zerfallen und reaktive Spezies zu bilden, die zur Initiierung einer Polymerisation ausgebildet sind, insbesondere zur Initiierung einer UV-Härtung nach dem Mechanismus der radikalischen Kettenpolymerisation. Auf diese Weise kann eine Aushärtung der Druckpaste mit besonders hoher Zuverlässigkeit und hoher Aushärtungsgeschwindigkeit erreicht werden.

Gemäß einer noch weiter bevorzugten Ausgestaltung kann der Photoinitiator Ethyl Phenyl(2,4,6-trimethylbenzoyl)Phosphinat aufweisen, bevorzugt mit einer Reinheit von mindestens 90 % oder mindestens 95 %. Ein solcher Photoinitiator ist verhältnismäßig kostengünstig in der Anschaffung und gewährleistet ein gutes Aushärtungsverhalten und eine hohe Reaktivität.

Gemäß einer noch weiter bevorzugten Ausgestaltung kann der Photoinitiator ein Hydroxyacetophenon aufweisen. Auch ein solcher Photoinitiator ist verhältnismäßig kostengünstig in der Anschaffung und gewährleistet gleichzeitig ein gutes Aushärtungsverhalten, ohne Beeinträchtigung des Druckverhaltens.

Gemäß einer noch weiter bevorzugten Ausgestaltung kann der Photoinitiator 1-Hydroxycyclohexyl Phenyl Keton aufweisen. Ein solcher Photoinitiator gewährleistet ebenso ein gutes Aushärtungsverhalten und eine geringe Neigung zur Vergilbung.

Gemäß einer noch weiter bevorzugten Ausgestaltung kann der Massenanteil des Photoinitiators weniger als 2 % betragen, bevorzugt weniger als 1,5 % oder weniger als 1 %, bevorzugt weniger als 0,5 %, weiter bevorzugt weniger als 0,1 %. Durch einen derart geringen Massenanteil des Photoinitiators wird das Druckverhalten sowie auch das mechanische Verhalten nach erfolgtem Druck nicht oder nur in geringem Umfang beeinträchtigt.

Gemäß einer noch weiter bevorzugten Ausgestaltung kann der Massenanteil des Photoinitiators mindestens 0,01 % betragen, bevorzugt mehr als 0,01 % oder mehr als 0,02 % oder mehr als 0,03 % oder etwa 0,04%. Eine solche Mindestmenge des Photoinitiators gewährleistet eine ausreichend hohe Prozesssicherheit für die Aushärtung der Druckpaste.

Gemäß einer noch weiter bevorzugten Ausgestaltung kann die Druckpaste eine Mehrzahl von unterschiedlichen Monomeren aufweisen. Die Druckeigenschaften sowie auch die Polymerisationseigenschaften der Druckpaste können auf diese Weise besonders vorteilhaft beeinflusst werden.

Gemäß einer noch weiter bevorzugten Ausgestaltung kann das wenigstens eine Monomer oder wenigstens ein Monomer eine Vielzahl von Monomeren der Druckpaste ein Acrylatmonomer sein, insbesondere ein Diacrylat. Zusätzlich oder alternativ können mehrere oder sämtliche Monomere der Druckpaste Acrylatmonomere sein. Die Verwendung eines Acrylatmonomers oder mehrerer Acrylatmonomere hat sich für die Aushärtung mittels eines Photoinitiators als besonders günstig erwiesen. Es lassen sich gute Druckergebnisse und bei gleichzeitig guter Aushärtbarkeit realisieren.

Gemäß einer noch weiter bevorzugten Ausgestaltung kann das wenigstens eine Monomer oder wenigstens ein Monomer der Druckpaste ein monofunktioneller oder bifunktioneller Monomer sein. Zusätzlich oder alternativ können mehrere oder sämtliche Monomere der Druckpaste monofunktionelle und/oder bifunktionelle Monomere sind oder höchstens bifunktionelle Monomere sein. Die Reaktivität beziehungsweise die Polymerisationseigenschaften der Druckpaste können auf diese Weise gezielt eingestellt werden.

Zusätzlich oder alternativ kann das wenigstens eine Monomer oder wenigstens ein Monomer der Druckpaste ein trifunktioneller oder mehrfunktioneller Monomer sein, insbesondere mit einer Funktionalität von drei oder mehr als drei. Die Reaktivität kann hierdurch erhöht werden, wodurch die Polymerisationseigenschaften der Druckpaste beeinflusst werden können.

Gemäß einer noch weiter bevorzugten Ausgestaltung kann der Massenanteil des Monomers oder der Monomere wenigstens 5 % betragen, bevorzugt mehr als 5 %, weiter bevorzugt mehr als 6 %, weiter bevorzugt mehr als 7 %, weiter bevorzugt mehr als 8 %, weiter bevorzugt mehr als 9 %, weiter bevorzugt mehr als 10 %, weiter bevorzugt mehr als 11 %, weiter bevorzugt mehr als 12 % oder etwa 12 %. Mit einem derartigen Mindestanteil eines Monomers oder von Monomeren kann in geeigneter Weise eine Polymerisation und damit Aushärtung nach erfolgtem Druck sichergestellt werden.

Gemäß einer noch weiter bevorzugten Ausgestaltung kann der Massenanteil des Monomers oder der Monomere weniger als 15 % betragen, bevorzugt weniger als 14 %, weiter bevorzugt weniger als 13 %, weiter bevorzugt weniger als 12,5 %. Durch einen derart begrenzten Massenanteil des Monomers oder der Monomere kann ein verhältnismäßig hoher Massenanteil an Feststoff in der Druckpaste eingestellt werden, was sich günstig auf die Eigenschaften des finalen Strömungsprofils auswirken kann.

Gemäß einer noch weiter bevorzugten Ausgestaltung kann das wenigstens eine Monomer oder wenigstens ein Monomer ein Polyethylen Glycol (200) Diacrylat sein. Polyethylen Glycol (200) Diacrylat ist ein bifunktionelles Acrylmonomer, das sich in besonders bevorzugter Weise zur Aushärtung durch Einsatz eines Photoinitiators, insbesondere unter Verwendung von Ultraviolettlicht und/oder Elektronenstrahleinwirkung, oder als Co-Monomer für die Polymersynthese eignet. Gleichzeitig kann durch ein solches Monomer eine verhältnismäßig hohe Flexibilität des erzeugten Drucks erzielt werden.

Gemäß einer noch weiter bevorzugten Ausgestaltung kann der Massenanteil an Polyethylen Glycol (200) Diacrylat wenigstens 5 % betragen, bevorzugt mehr als 5 %, weiter bevorzugt mehr als 6 %, weiter bevorzugt mehr als 7 %, weiter bevorzugt mehr als 8 %, weiter bevorzugt mehr als 9 %, weiter bevorzugt mehr als 10 %, weiter bevorzugt mehr als 11 %, weiter bevorzugt mehr 11 %. Mit einem solchen Mindestanteil an Polyethylen Glycol (200) Diacrylat lässt sich eine Aushärtung beziehungsweise Polymerisation mit besonders hoher Sicherheit und Zuverlässigkeit erzielen.

Gemäß einer noch weiter bevorzugten Ausgestaltung kann der Massenanteil an Polyethylen Glycol (200) Diacrylat weniger als 15 % betragen, bevorzugt weniger als 14 %, weiter bevorzugt weniger als 13 %, weiter bevorzugt weniger als 12 %. Durch einen solchen Massenanteil von Polyethylen Glycol (200) Diacrylat kann ein ausreichend hoher Massenanteil von Feststoff in der Druckpaste vorgesehen werden, wodurch wiederum die mechanischen Eigenschaften des erzeugten Werkstücks und auch die Fertigungspräzision begünstigt werden können.

Gemäß einer noch weiter bevorzugten Ausgestaltung kann das wenigstens eine Monomer oder wenigstens ein Monomer ein Tertiobutyl Cyclohexyl Acrylat sein. Insbesondere kann es sich bei einem solchen Monomer um ein Monomer mit der registrierten Bezeichnung 4-(1,1-Dimethylethyl)cyclohexylacrylat handeln. Bei dem Monomer Tertiobutyl Cyclohexyl Acrylat beziehungsweise 4-(1,1-Dimethylethyl)cyclohexylacrylat handelt es sich um ein niedrigviskoses, aliphatisches, monofunktionales Monomer, das sich insbesondere zur Aushärtung durch Einsatz eines Photoinitiators, insbesondere unter Verwendung von Ultraviolettlicht und/oder Elektronenstrahleinwirkung, in Druckpasten eignet. Durch ein solches Monomer wird zudem die Haftung verbessert. Das Monomer Tertiobutyl Cyclohexyl Acrylat eignet sich mithin besonders vorteilhaft als Haftvermittler und begünstigt somit auch den Gefügezusammenhalt der Druckpaste und/oder die Verbindung unterschiedlicher Druckschichten zueinander.

Gemäß einer noch weiter bevorzugten Ausgestaltung kann der Massenanteil an Tertiobutyl Cyclohexyl Acrylat beziehungsweise 4-(1,1-Dimethylethyl)cyclohexylacrylat wenigstens 0,5 % betragen, bevorzugt mehr als 0,5 %, weiter bevorzugt mehr als 0,6 %, weiter bevorzugt mehr als 0,7 %, weiter bevorzugt mehr als 0,8 %, weiter bevorzugt mehr als 0,9 %, weiter bevorzugt etwa 1 %. Es ergeben sich für den jeweiligen Druckvorgang beziehungsweise den schichtweisen Aufbau mehrerer Druckschichten im Wege des dreidimensionalen Siebdrucks besonders gute Hafteigenschaften, ohne übermäßige Verklebungen zu erzeugen.

Gemäß einer noch weiter bevorzugten Ausgestaltung kann der Massenanteil an Tertiobutyl Cyclohexyl Acrylat beziehungsweise 4-(1,1-Dimethylethyl)cyclohexylacrylat weniger als 2 % betragen, bevorzugt weniger als 1,5 %, weiter bevorzugt weniger als 1,2 %, weiter bevorzugt weniger als 1,1 %. Mit einer solchen Beschränkung des Massenanteils kann eine übermäßige Verklebung der Druckpaste im Druckprozess mit hoher Sicherheit vermieden werden.

Gemäß einer noch weiter bevorzugten Ausgestaltung kann das wenigstens eine Monomer oder wenigstens ein Monomer ein ethoxyliertes Trimethylolpropan-Triacrylat sein. Es handelt es sich um ein niedrigviskoses, bifunktionelles Monomer, insbesondere Acrylat-Monomer, das sich insbesondere zur Aushärtung durch Einsatz eines Photoinitiators, insbesondere unter Verwendung von Ultraviolettlicht und/oder Elektronenstrahleinwirkung, in Druckpasten eignet. Ein solches Monomer weist insbesondere gute Polymerisationseigenschaften, Flexibilität sowie vorteilhafte Adhäsionseigenschaften auf.

Bei einem ethoxylierten Trimethylolpropan-Triacrylat kann es sich insbesondere um eine Stoffzusammensetzung mit der registrierten Bezeichnung Poly(oxy-1,2-ethandiyl). alpha. -hydro-. omega. -[(1-oxo-2-propenyl) oxy]-, ether mit 2-ethyl-2-(hydroxymethyl) -1,3-propandiol (3:1) handeln.

Gemäß einer noch weiter bevorzugten Ausgestaltung kann der Massenanteil an ethoxyliertem Trimethylolpropan-Triacrylat wenigstens 3 % betragen, bevorzugt mehr als 5 %, mehr als 8 % oder mehr als 10 %. Mit einem solchen Massenanteil kann eine zuverlässige Polymerisation bei gleichzeitig hoher Flexibilität sowie ausreichender Adhäsion der Druckschichten sichergestellt werden.

Gemäß einer noch weiter bevorzugten Ausgestaltung kann der Massenanteil an ethoxyliertem Trimethylolpropan-Triacrylat weniger als 15 %, bevorzugt weniger als 13 % oder weniger als 12 % oder weniger als 11 % betragen. Mit einer solchen Beschränkung des Massenanteils kann eine übermäßige Verklebung der Druckpaste im Druckprozess mit hoher Sicherheit vermieden werden und gleichzeitig ein hoher Massenanteil des Feststoffs ermöglicht werden.

Gemäß einer noch weiter bevorzugten Ausgestaltung kann das wenigstens eine Monomer oder wenigstens ein Monomer ein niedrigviskoses bifunktionelles Acrylat-Monomer sein. Durch ein bifunktionelles Acrylat-Monomer kann eine geeignete Reaktivität der Druckpaste im Hinblick auf eine Polymerisation erzielt werden. Ein niedrigviskoses bifunktionelles Acrylat-Monomer ermöglicht darüber hinaus eine ausreichende Fließfähigkeit, die bei Bedarf durch eine gezielte Menge des Rheologie-Additivs eingestellt werden kann.

Gemäß einer noch weiter bevorzugten Ausgestaltung kann das wenigstens eine Monomer oder wenigstens ein Monomer ein Tricyclodecanedimethanol Diacrylat sein. Hierbei handelt es sich ebenfalls um ein bifunktionelles Monomer, insbesondere Acrylat-Monomer, das sich in besonders bevorzugter Weise zur Aushärtung durch Einsatz eines Photoinitiators, insbesondere unter Verwendung von Ultraviolettlicht und/oder Elektronenstrahleinwirkung, in Druckpasten eignet. Ein solches Monomer weist insbesondere gute Polymerisationseigenschaften, Flexibilität sowie vorteilhafte Adhäsionseigenschaften auf.

Gemäß einer noch weiter bevorzugten Ausgestaltung kann der Massenanteil an Tricyclodecanedimethanol Diacrylat wenigstens 1 % oder wenigstens 2% und/oder weniger als 5 % oder weniger als 4 % betragen. Mit einem solchen Massenanteil kann eine übermäßige Verklebung der Druckpaste im Druckprozess vermieden werden und gleichzeitig eine gute Polymerisation sowie ein hoher Massenanteil des Feststoffs ermöglicht werden.

Gemäß einer noch weiter bevorzugten Ausgestaltung kann das wenigstens eine Monomer oder wenigstens ein Monomer ein Dipropylen Glycol Diacrylat sein. Es handelt sich bei Dipropylen Glycol Diacrylat (DPGDA) um ein Acrylat-Monomer mit verhältnismäßig niedriger Viskosität, geringer Flüchtigkeit sowie schneller Aushärtbarkeit und guter Verdünnung. Dieser Bestandteil kann in vorteilhafter Weise als klare Flüssigkeit in die Druckpaste zugemischt werden und/oder enthalten sein und eignet sich insbesondere für die Aushärtung mittels eines Photoinitiators durch Polymerisation.

Gemäß einer noch weiter bevorzugten Ausgestaltung kann der Massenanteil an Dipropylen Glycol Diacrylat wenigstens 1 % oder wenigstens 2 % oder wenigstens 5 % oder weniger als 10 % oder weniger als 8 % oder weniger als 7 % betragen. Mit einem solchen Massenanteil kann eine vorteilhafte Aushärtung der Druckpaste nach erfolgtem Druckprozess sowie eine gute Druckbarkeit sichergestellt und gleichzeitig eine ein hoher Massenanteil des Feststoffs ermöglicht werden.

Gemäß einer noch weiter bevorzugten Ausgestaltung kann die Druckpaste wenigstens einen Oligomer oder eine Mehrzahl von unterschiedlichen Oligomeren aufweisen. Durch wenigstens einen Oligomer oder eine Mehrzahl von Oligomeren kann eine Polymerisation, insbesondere ausgelöst nach Absorption von Licht durch einen Photoinitiator, in besonders vorteilhafter Weise und mit hoher Zuverlässigkeit erfolgen.

Gemäß einer noch weiter bevorzugten Ausgestaltung kann das wenigstens eine Oligomer ein Acrylat-Oligomer sein oder mehrere oder sämtliche Oligomere können Acrylat-Oligomere sein. Ein Acrylat-Oligomer kann hervorragende Reaktionsfähigkeiten aufweisen und eine geeignete Aushärtung durch Polymerisation in vorteilhafter Weise begünstigen.

Gemäß einer noch weiter bevorzugten Ausgestaltung kann das wenigstens eine Oligomer ein Polyester oder Polyether sein. Ein solches Oligomer kann besonders kostengünstig bereitgestellt werden und damit eine ausgesprochen wirtschaftliche Fertigung ermöglichen.

Gemäß einer noch weiter bevorzugten Ausgestaltung kann das wenigstens eine Oligomer ein monofunktioneller oder bifunktioneller Oligomer sein und/oder mehrere oder sämtliche Oligomere können monofunktionelle und/oder bifunktionelle Oligomere sein oder höchstens bifunktionelle Oligomere sein. Ebenso können in der Druckpaste als Oligomere ausschließlich monofunktionelle oder bifunktionelle Oligomere enthalten sein. Auf diese Weise kann die Reaktivität der Druckpaste in besonders vorteilhafter Weise eingestellt sein und ein sicherer und zuverlässiger Polymerisationsvorgang gewährleistet werden.

Gemäß einer noch weiter bevorzugten Ausgestaltung kann das wenigstens eine Oligomer ein aliphatisches Urethan-Acrylat sein. Aliphatisches Urethan-Acrylat weist gute mechanische Eigenschaften, gute Reaktivität und Aushärtbarkeit sowie eine niedrige Viskosität auf.

Gemäß einer noch weiter bevorzugten Ausgestaltung kann das wenigstens eine Oligomer ein hexafunktionales aliphatisches Urethan-Acrylat sein. Ein solches Urethan-Acrylat weist besonders vorteilhafte mechanische Eigenschaften, eine besonders geeignete Reaktivität und Aushärtbarkeit sowie eine niedrige Viskosität auf.

Gemäß einer noch weiter bevorzugten Ausgestaltung kann das wenigstens eine Oligomer ein aliphatisches polyester-basiertes und/oder polyether-basiertes Urethan-Acrylat-Oligomer sein. Ein solches Urethan-Acrylat kann verhältnismäßig kostengünstig bereitgestellt werden und weist gleichzeitig vorteilhafte mechanische Eigenschaften, eine besonders geeignete Reaktivität und Aushärtbarkeit auf und gewährleistet eine niedrige Viskosität.

Gemäß einer noch weiter bevorzugten Ausgestaltung kann das wenigstens eine Oligomer ein bifunktionelles Epoxy-Acrylat sein. Es kann sich hierbei insbesondere um einen Bisphenol A Epoxy-Acrylat handeln. Ein solches Epoxy-Acrylat kann als farblose Flüssigkeit zugemischt werden und für eine hohe Reaktivität gewährleisten und hervorragende chemische und mechanische Beständigkeitseigenschaften begünstigen. Ein solches Epoxy-Acrylat eignet sich in besonders bevorzugter Weise für die Aushärtbarkeit der Druckpaste durch Absorption von Licht.

Gemäß einer noch weiter bevorzugten Ausgestaltung kann der Massenanteil des Oligomers oder der Oligomere wenigstens 5 % betragen, bevorzugt mehr als 5 %, weiter bevorzugt mehr als 6 %, weiter bevorzugt mehr als 7 %, weiter bevorzugt mehr als 8 % oder etwa 8 %. Durch einen solchen Anteil können gute mechanische Eigenschaften sowie eine besonders vorteilhafte Reaktivität der Druckpaste sichergestellt werden.

Gemäß einer noch weiter bevorzugten Ausgestaltung kann der Massenanteil des Oligomers oder der Oligomere weniger als 15 % betragen, bevorzugt weniger als 12 %, weiter bevorzugt weniger als 10 %, weiter bevorzugt weniger als 9 %. Durch einen derart begrenzten Massenanteil des Oligomers oder der Oligomere kann ein verhältnismäßig hoher Massenanteil an Feststoff in der Druckpaste eingestellt werden und eine zu hohe Reaktivität der Druckpaste kann vermieden werden. Insgesamt kann sich eine solche Druckpaste günstig auf die Eigenschaften des finalen Werkstücks auswirken.

Gemäß einer noch weiter bevorzugten Ausgestaltung kann die Druckpaste frei von polyfunktionellen Monomeren und/oder frei von polyfunktionellen Oligomeren erzeugt sein. Eine unerwünscht hohe Reaktivität lässt sich damit verhindern.

Gemäß einer noch weiter bevorzugten Ausgestaltung kann die Druckpaste wenigstens ein gesondertes Lösungsmittel, insbesondere ein organisches Lösungsmittel, aufweisen. Ein solches Lösungsmittel eignet sich in besonders bevorzugter Weise zur Verdünnung der Druckpaste und kann damit eine gute Fließfähigkeit und/oder Druckbarkeit im Wege des dreidimensionalen Siebdrucks gewährleisten.

Gemäß einer noch weiter bevorzugten Ausgestaltung kann das gesonderte Lösungsmittel Glykolehter aufweisen, insbesondere Dipropylenglycolmethylether und/oder Dipropylenglykolmonomethylether. Ein solches Lösungsmittel hat sich als Bestandteil einer Druckpaste für den Einsatz im dreidimensionalen Siebdruckverfahren als besonders vorteilhaft erwiesen.

Gemäß einer noch weiter bevorzugten Ausgestaltung kann der Massenanteil an gesondertem Lösungsmittel wenigstens 0,5 % betragen, bevorzugt mehr als 0,5 %, weiter bevorzugt mehr als 0,6 %, weiter bevorzugt mehr als 0,7 %, weiter bevorzugt mehr als 0,8 %, weiter bevorzugt mehr als 0,9 %, weiter bevorzugt etwa 1 %. Ein Lösungsmittel in einer solchen Menge lässt sich nach erfolgtem Druck mit nur geringem Aufwand durch eine Entbinderung wieder entfernen und gewährleistet gleichzeitig eine ausreichende Verdünnung.

Gemäß einer noch weiter bevorzugten Ausgestaltung kann der Massenanteil an gesondertem Lösungsmittel weniger als 2 % betragen, bevorzugt weniger als 1,5 %, weiter bevorzugt weniger als 1,2 %, weiter bevorzugt weniger als 1,1 %.

Hierdurch können die Fließeigenschaften in besonders vorteilhafter begünstigt werden, insbesondere eine zu starke Fließfähigkeit vermieden werden.

Gemäß einer noch weiter bevorzugten Ausgestaltung kann die Druckpaste zumindest ein Dispergier-Additiv aufweisen. Durch den Einsatz eines solchen Dispergier-Additivs kann ein besonders hoher Feststoffanteil in der Druckpaste realisiert werden. Es lässt sich eine besonders gleichmäßige Vermischung des jeweiligen Feststoffs in der Druckpaste sicherstellen und dadurch eine hohe Druckqualität gewährleisten.

Gemäß einer noch weiter bevorzugten Ausgestaltung kann das Dispergier-Additiv ein Netz- und Dispergier-Additiv sein oder ausschließlich als Dispergier-Additiv wirken. Durch ein Netz- und Dispergier-Additiv kann in besonders bevorzugter Weise eine auch eine gute Benutzung der Druckpaste sichergestellt werden, insbesondere, insbesondere ohne, dass in einem Drucksieb oder nach dem Druck nicht-benetzte Bereiche oder trockene Stellen entstehen oder übrigbleiben. Eine Ausgestaltung als ausschließliches Dispergier-Additiv kann mit geringem Aufwand und zu verringerten Kosten bereitgestellt werden.

Gemäß einer noch weiter bevorzugten Ausgestaltung kann das Dispergier-Additiv eine Lösung eines hochmolekularen Block-Copolymeren mit pigmentaffinen Gruppen sein. Ein solches Additiv erzielt eine besonders vorteilhafte Stabilisierung, insbesondere von organischen Pigmenten beziehungsweise Partikeln. Zudem kann eine deflockulierende Wirkung gewährleistet werden. Ein solches Additiv kann eine besonders hohe Verträglichkeit mit zahlreichen Oligomeren und Monomeren aufweisen, insbesondere Oligomeren und Monomeren, die in UV-härtenden System eingesetzt werden.

Gemäß einer noch weiter bevorzugten Ausgestaltung kann das Dispergier-Additiv ein Copolymer mit sauren Gruppen aufweisen. Es kann sich bei einem solchen Dispergier-Additiv insbesondere um Phosphorsäureester handeln. Ein solches Additiv kann durch sterische Stabilisierung eine Deflockulation von Pigmenten beziehungsweise Partikeln gewährleisten. Weiterhin kann die Viskosität reduziert werden und die Deckfähigkeit verbessert sich. Auf diese Weise kann zudem auch das Verlaufsverhalten verbessert werden.

Gemäß einer noch weiter bevorzugten Ausgestaltung kann das Dispergier-Additiv einen Massenanteil der Wirksubstanz von mindestens 20 % und/oder von weniger als 40 % aufweist, insbesondere von 30 % oder etwa 30 %. Ebenso kann das Dispergier-Additiv einen Massenanteil der Wirksubstanz von mindestens 50 %, mindestens 60%, mindestens 70%, mindestens 80%, mindestens 90% oder 100% oder etwa 100% aufweisen.

Ein solches Dispergier-Additiv kann mithin eine geringe Konzentration aufweisen und damit präzise dosiert werden. Ebenso kann eine hohe Konzentration vorgesehen sein, sodass durch Zugabe des Dispergier-Additivs eine nur geringe Verdünnung der Druckpaste einhergeht.

Gemäß einer noch weiter bevorzugten Ausgestaltung kann das Dispergier-Additiv als Lösemittel Propoxyliertes Glyceryltriacrylat (GPTA) aufweist. Ein solches Lösungsmittel kann kostengünstig bereitgestellt werden und gewährleistet eine geeignete Verdünnung der jeweiligen Wirksubstanz.

Gemäß einer noch weiter bevorzugten Ausgestaltung kann der Massenanteil des Dispergier-Additivs wenigstens 0,5 % beträgt, bevorzugt mehr als 0,5 %, weiter bevorzugt mehr als 0,6 %, weiter bevorzugt mehr als 0,7 %, weiter bevorzugt mehr als 0,8 %, weiter bevorzugt mehr als 0,9 %, weiter bevorzugt etwa 1 %. Ein solcher Massenanteil kann eine ausreichende Vermischung und Benetzung bei gleichzeitig geringer Beeinträchtigung der Gesamtzusammensetzung der Druckpaste gewährleisten.

Gemäß einer noch weiter bevorzugten Ausgestaltung kann der Massenanteil des Dispergier-Additivs weniger als 2 % betragen, bevorzugt weniger als 1,5 %, weiter bevorzugt weniger als 1,2 %, weiter bevorzugt weniger als 1,1 %. Durch eine derartige Begrenzung des Dispergier-Additivs können weitere Bestandteile der Druckpaste in verhältnismäßig hohen Massenanteilen vorgesehen sein, insbesondere ein hoher Massenanteil des Feststoffs.

Gemäß einer noch weiter bevorzugten Ausgestaltung kann die Druckpaste eine Mehrzahl von unterschiedlichen Rheologie-Additiven aufweisen. Die rheologischen Eigenschaften können auf diese Weise besonders vorteilhaft eingestellt sein, insbesondere im Hinblick auf die weiteren Bestandteile der Druckpaste sowie deren Massenanteile.

Gemäß einer noch weiter bevorzugten Ausgestaltung kann der Massenanteil des Rheologie-Additivs oder der Rheologie-Additive wenigstens 1 % betragen, bevorzugt mehr als 1 %, weiter bevorzugt mehr als 1,5 %, weiter bevorzugt mehr als 2 %, weiter bevorzugt mehr als 2,5 %, weiter bevorzugt mehr als 3 %, weiter bevorzugt mehr als 3,5 %, weiter bevorzugt etwa 3,6 % oder 3,6 %. Durch die Zugabe eines rheologischen Additivs in einem solchen Massenanteil kann das Fließverhalten der Druckpaste in ausreichender Weise beeinflusst und damit die Fertigung im Wege des 3D-Siebdrucks begünstigt werden.

Gemäß einer noch weiter bevorzugten Ausgestaltung kann der Massenanteil des Rheologie-Additivs oder der Rheologie-Additive weniger als 5 % betragen, bevorzugt weniger als 4,5 %, weiter bevorzugt weniger als 4 %, weiter bevorzugt weniger als 3,8 %. Durch die Zugabe eines rheologischen Additivs in einem derart begrenzten Massenanteil kann das Fließverhalten der Druckpaste einerseits ausreichend beeinflusst und die Fertigung im Wege des 3D-Siebdrucks begünstigt werden. Zudem kann eine Entbinderung eines derart begrenzten Massenanteils mit nur geringem Aufwand bewerkstelligt werden.

Gemäß einer noch weiter bevorzugten Ausgestaltung kann das wenigstens eine Rheologie-Additiv eine flüssige Substanz sein und/oder in flüssiger Form eingemischt sein. Auf diese Weise kann die Druckpaste mit nur geringem Aufwand hergestellt und beispielsweise für einen dreidimensionalen Siebdruckvorgang zur Verfügung gestellt werden.

Gemäß einer noch weiter bevorzugten Ausgestaltung kann das wenigstens eine Rheologie-Additiv eine pulverförmige Substanz sein und/oder in Pulverform eingemischt sein. Das wenigstens eine Rheologie-Additiv kann Zellulose und/oder ein Zellulose-Derivat aufweisen und/oder aus Zellulose und/oder aus einem Zellulose-Derivat bestehen. Dies kann kostengünstig bewerkstelligt werden und eine einfache Lagerung für die spätere Herstellung der Druckpaste ermöglichen.

Gemäß einer noch weiter bevorzugten Ausgestaltung kann das wenigstens eine Rheologie-Additiv zur Erzeugung eines thixotropen Fließverhaltens ausgebildet sein. Das Fließverhalten während des Drucks kann hierdurch begünstigt werden und gleichzeitig ein unerwünschtes Zerfließen nach oder vor dem Druck verhindert werden. Der dreidimensionale Siebdruck mit einer solchen Druckpaste kann hierdurch begünstigt und eine hohe Druckpräzision erzielt werden.

Gemäß einer noch weiter bevorzugten Ausgestaltung kann das wenigstens eine Rheologie-Additiv für mittelpolare lösemittelhaltige und/oder lösemittelfreie Systeme ausgebildet sein. Das Rheologie-Additiv kann mithin insbesondere für mittelpolare lösemittelhaltige und/oder lösemittelfreie Systeme eingesetzt werden, wodurch für ein solches System eine besonders hohe Funktionalität gewährleistet wird.

Gemäß einer noch weiter bevorzugten Ausgestaltung kann das wenigstens eine Rheologie-Additiv für hochpolare oder niedrigpolare lösemittelhaltige und/oder lösemittelfreie Systeme ausgebildet sein. Das Rheologie-Additiv kann mithin insbesondere für hochpolare oder niedrigpolare lösemittelhaltige und/oder lösemittelfreie Systeme eingesetzt werden, wodurch für ein solches System eine besonders hohe Funktionalität gewährleistet wird.

Gemäß einer noch weiter bevorzugten Ausgestaltung kann das wenigstens eine Rheologie-Additiv als Lösung eines modifizierten Harnstoffs ausgebildet ist. Ein solches Rheologie-Additiv kann besonders kostengünstig bereitgestellt werden und damit eine wirtschaftliche Fertigung gewährleisten. Ein solches Additiv baut nach dem Einrühren in die Druckpaste insbesondere eine dreidimensionale Netzwerkstruktur auf. Ein resultierendes thixotropes Fließverhalten ist besonders vorteilhaft zur Vermeidung von Bodensatzbildung und zur Erhöhung des Standvermögens geeignet. Der Verlauf der Druckpaste wird dabei nicht oder kaum verschlechtert.

Gemäß einer noch weiter bevorzugten Ausgestaltung kann das wenigstens eine Rheologie-Additiv als Lösungsmittel Dimethylsulfoxid aufweisen. Ein solches Lösungsmittel gewährleistet eine geeignete Verdünnung des Additivs, ohne die Wirksamkeit zur Beeinflussung des Fließverhaltens negativ zu beeinflussen.

Gemäß einer noch weiter bevorzugten Ausgestaltung kann das wenigstens eine Rheologie-Additiv als Lösungsmittel Amidether aufweisen. Ein solches Lösungsmittel gewährleistet ebenfalls eine geeignete Verdünnung des Additivs, ohne die Wirksamkeit zur Beeinflussung des Fließverhaltens negativ zu beeinflussen.

Gemäß einer noch weiter bevorzugten Ausgestaltung kann das Rheologie-Additiv einen Massenanteil der Wirksubstanz von mindestens 20 % aufweisen, bevorzugt von mehr als 20 %, weiter bevorzugt von mehr als 30 %, weiter bevorzugt von mehr als 40% oder von 40%, weiter bevorzugt von mehr als 50% oder von 50% oder von 52%. Durch einen solchen Mindestanteil der Wirksamkeit kann bereits mit einer verhältnismäßig geringen Zugabe eine ausreichende rheologische Wirkung erzielt werden.

Gemäß einer noch weiter bevorzugten Ausgestaltung kann das Rheologie-Additiv einen Massenanteil der Wirksubstanz von weniger als 70 % aufweisen, insbesondere von weniger als 60 % oder von weniger als 55 %. Dies erlaubt eine besonders präzise Dosierung der Wirksubstanz und eine insgesamt geringe Beeinflussung der Massenanteile der weiteren Bestandteile der Druckpaste.

Gemäß einer noch weiter bevorzugten Ausgestaltung kann die Druckpaste einen Mindestbestandteil an reaktiver Tonerde und/oder Magnesiumoxid aufweisen, insbesondere einem Massenanteil an reaktiver Tonerde und/oder Magnesiumoxid von bis zu 20 % oder bis zu 15 % oder bis zu 10 %. Mit einer solchen Druckpaste können im Ergebnis sehr feine und dichte Druckstrukturen hergestellt werden.

Gemäß einer noch weiter bevorzugten Ausgestaltung kann die Druckpaste einen Mindestbestandteil an Bindemittel und/oder Polyvinylbutyral als Bindemittel aufweisen, insbesondere mit einem Massenanteil von wenigstens 0,05 % oder wenigstens 0,1 und/oder weniger als 1 % oder weniger als 0,5 %. Durch den Zusatz eines Bindemittels und/oder Polyvinylbutyral als Bindemittel ergibt sich ferner eine noch bessere Verarbeitbarkeit der Druckpaste im Wege des dreidimensionalen Siebdrucks.

Gemäß einer noch weiter bevorzugten Ausgestaltung kann die Druckpaste die folgenden Bestandteile in Massenprozent aufweisen:

- Keramischer Feststoff: 70 % bis 85 %
- Monomer(e): 7 % bis 15 %
- Oligomer(e): 5 % bis 10 %
- Photoinitiator(en): 0,01 % bis 0,1 %
- Dispergier-Additiv(e): 0,5 % bis 2 %
- Rheologie-Additiv(e): 1,5 % bis 4,5 %

- Rest unvermeidbare Verunreinigungen

Eine solche Druckpaste eignet sich in besonders vorteilhafter Weise für die Herstellung des Strömungsprofils. Es kann eine gute Druckbarkeit im Wege des dreidimensionalen Siebdrucks und mit nur geringem Aufwand eine Aushärtung durch Polymerisation, insbesondere Photopolymerisation, bewerkstelligt werden. Mit einer solchen Druckpaste lassen sich Strömungsprofile mit hohen Qualitätseigenschaften, insbesondere hoher Fertigungsgenauigkeit und guten mechanischen Eigenschaften, erzeugen.

Gemäß einer noch weiter bevorzugten Ausgestaltung kann die Druckpaste die folgenden Bestandteile in Massenprozent aufweisen:

- Keramischer Feststoff: 70 % bis 85 %
- Monomer(e): 7 % bis 15 %
- Oligomer(e): 5 % bis 10 %
- Photoinitiator(en): 0,01 % bis 0,1 %
- Dispergier-Additiv(e): 0,5 % bis 2 %
- Rheologie-Additiv(e): 1,5 % bis 4,5 %
- Gesonderte(s) Lösungsmittel: 0,5 % bis 1,5 %
- Rest unvermeidbare Verunreinigungen

Auch eine solche Druckpaste eignet sich vorteilhaft Weise für die Herstellung von Strömungsprofilen. Es kann eine besonders gute Druckbarkeit im Wege des dreidimensionalen Siebdrucks und mit nur geringem Aufwand eine Aushärtung durch Polymerisation, insbesondere Photopolymerisation, bewerkstelligt werden. Mit einer solchen Druckpaste lassen sich Strömungsprofilen mit hohen Qualitätseigenschaften, insbesondere hoher Fertigungsgenauigkeit und guten mechanischen Eigenschaften, erzeugen.

Gemäß einer noch weiter bevorzugten Ausgestaltung kann die Druckpaste die folgenden Bestandteile in Massenprozent aufweisen:

- Aluminiumoxid oder Aluminiumnitrid: 70 % bis 85 %
- Polyethylen Glycol (200) Diacrylat: 10 % bis 12 %
- Aliphatisches Urethan-Acrylat: 7 % bis 9 %
- Tertiobutyl Cyclohexyl Acrylat: 0,5 % bis 2 %
- Photoinitiator(en), insbesondere Ethyl Phenyl(2,4,6-trimethylbenzoyl)Phosphinat: 0,01 % bis 0,1 %
- Dispergier-Additiv(e) in Form eines hochmolekularen Block-Copolymeren mit pigmentaffinen Gruppen: 0,5 % bis 2 %
- Rheologie-Additiv(e) in Form von Harnstofflösung(en): 0,5 % bis 2 %
- Dipropylenglycolmethylether: 0,5 % bis 1,5 %
- Rest unvermeidbare Verunreinigungen

Eine solche Druckpaste eignet sich noch weiter bevorzugter Weise für die Herstellung von Strömungsprofilen. Es kann eine ausgezeichnete Druckbarkeit im Wege des dreidimensionalen Siebdrucks und eine besonders gut kontrollierte Aushärtung durch Polymerisation, insbesondere Photopolymerisation, erzielt werden. Mit einer solchen Druckpaste können mit hoher Wirtschaftlichkeit Strömungsprofile mit besonders hohen Qualitätseigenschaften erzeugt werden, insbesondere einer hohen Fertigungsgenauigkeit und guten mechanischen Eigenschaften.

Mit einer solchen Druckpaste lassen sich insbesondere für den dreidimensionalen Siebdruck geeignete Viskositäten erreichen, nämlich etwa 500 Pa s bei einer Scherrate von 0,1 s$^{-1}$ und/oder etwa 200 Pa s bei einer Scherrate von 1 s$^{-1}$ und/oder etwa 50 Pa s bei einer Scherrate von 10 s$^{-1}$ und/oder etwa 10 Pa s bei einer Scherrate von 200 s$^{-1}$ und/oder etwa 5 Pa s oder 6 Pa s bei einer Scherrate von 400 s$^{-1}$. Dies gewährleistet besonders vorteilhafte Druckbarkeit.

Gemäß einer noch weiter bevorzugten Ausgestaltung kann die Druckpaste die folgenden Bestandteile in Massenprozent aufweisen:

- Keramischer Feststoff: 70 % bis 85 %
- Monomer(e): 12 % bis 18 %
- Photoinitiator(en): 0,01 % bis 0,1 %
- Dispergier-Additiv(e): 0,5 % bis 2 %
- Rheologie-Additiv(e): 2 % bis 5 %
- Gesonderte(s) Lösungsmittel: 1,5 % bis 3,5 %
- Rest unvermeidbare Verunreinigungen

Auch mit einer solchen Druckpaste eignet sich in bevorzugter Weise für die Herstellung von Strömungsprofilen. Es kann eine sehr gute Druckbarkeit im Wege des dreidimensionalen Siebdrucks erzielt werden. Ebenso lässt sich mit Monomeren eine gut kontrollierte Aushärtung durch Polymerisation, insbesondere Photopolymerisation, erreichen. Mit einer solchen Druckpaste können Strömungsprofile mit besonders hohen Qualitätseigenschaften erzeugt werden, insbesondere einer hohen Fertigungsgenauigkeit und guten mechanischen Eigenschaften.

Gemäß einer noch weiter bevorzugten Ausgestaltung kann die Druckpaste die folgenden Bestandteile in Massenprozent aufweisen:

- Zirconiumdioxid: 70 % bis 85 %
- Polyethylen Glycol (200) Diacrylat: 8 % bis 11 %
- Dipropylen Glycol Diacrylat: 3 % bis 7 %
- Tertiobutyl Cyclohexyl Acrylat: 0,5 % bis 2 %
- Photoinitiator(en), insbesondere Ethyl Phenyl(2,4,6-trimethylbenzoyl)Phosphinat: 0,01 % bis 0,1 %
- Dispergier-Additiv(e) in Form eines Copolymeren mit sauren Gruppen: 0,5 % bis 2 %
- Rheologie-Additiv(e) in Form von Harnstofflösung(en): 2,5 % bis 4,5 %
- Dipropylenglycolmethylether: 1,5 % bis 3,5 %
- Rest unvermeidbare Verunreinigungen

Nachfolgend wird die Erfindung beispielhaft unter Bezugnahme auf die beigefügten Figuren beschrieben. Es zeigen, jeweils schematisch:

Fig. 1 ein Ausführungsbeispiel einer erfindungsgemäßen Bipolarplatte in einer perspektivischen Darstellung,

Fig. 2 das Ausführungsbeispiel der erfindungsgemäßen Bipolarplatte von Fig. 1 in einer Explosionsdarstellung,

Fig. 3 das Ausführungsbeispiel der erfindungsgemäßen Bipolarplatte von Fig. 1 in einer Draufsicht,

Fig. 4 das Ausführungsbeispiel der erfindungsgemäßen Bipolarplatte von Fig. 1 in einer Unteransicht,

Fig. 5 das Ausführungsbeispiel der erfindungsgemäßen Bipolarplatte von Fig. 1 in einer Seitenansicht,

Fig. 6 das Ausführungsbeispiel der erfindungsgemäßen Bipolarplatte von Fig. 1 in einer Schnittdarstellung,

Fig. 7 eine Detailansicht VII der Schnittdarstellung aus Fig. 6,

Fig. 8 ein Ausführungsbeispiel eines erfindungsgemäßen Brennstoffzellenstapels in einer Seitenansicht,

Fig. 9 ein Ausführungsbeispiel für ein erfindungsgemäßes Verfahren.

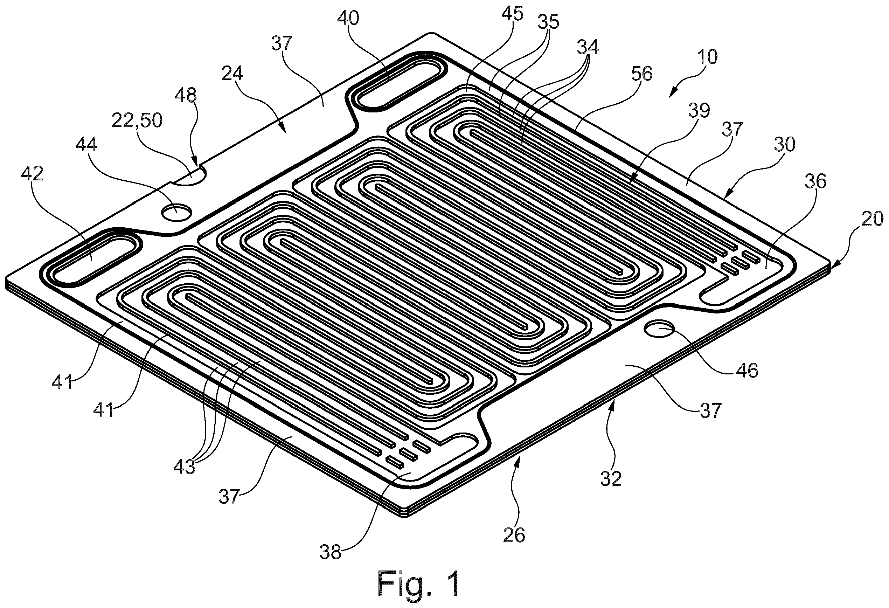

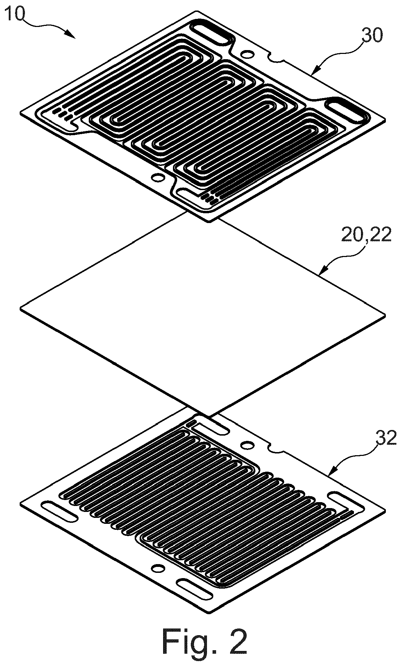

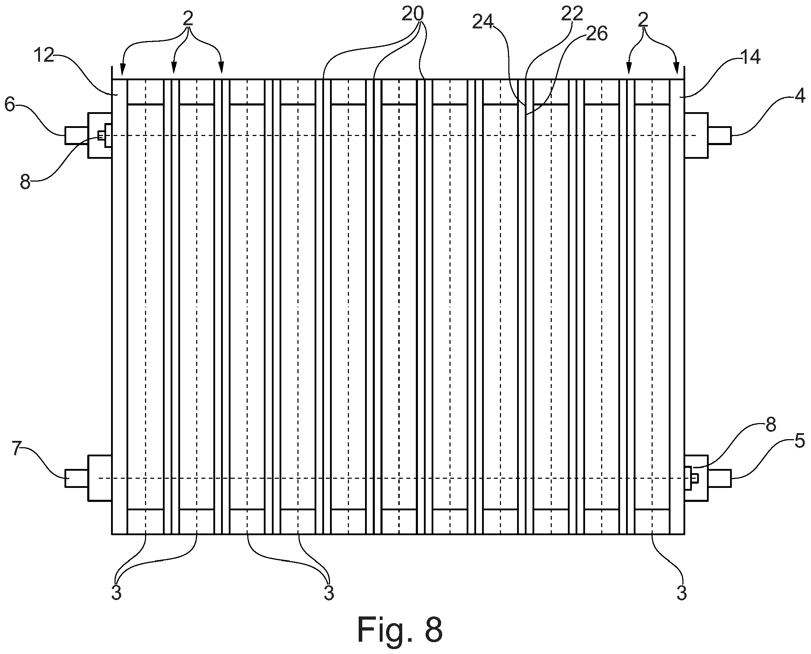

Fig. 1 zeigt ein Ausführungsbeispiel einer erfindungsgemäßen Bipolarplatte 10 für einen beispielsweise in Fig. 8 gezeigten Brennstoffzellenstapel 1 in einer perspektivischen Ansicht. Eine Explosionsdarstellung der Bipolarplatte 10 ist Fig. 2 zu entnehmen.

Die Bipolarplatte 10 weist eine Tragstruktur 20 auf, welche unter anderem zum mechanischen Zusammenhalt der Bipolarplatte 10 beiträgt und eine hohe elektrische Leitfähigkeit gewährleistet. Die Tragstruktur 20 weist insbesondere eine Graphitfolie 22 auf, die ferner gasdicht ausgebildet sein kann. In dem vorliegenden Ausführungsbeispiel kann die Tragstruktur 20 ausschließlich durch die Graphitfolie 22 ausgebildet sein. Die Tragstruktur 20 kann in anderen Ausführungsbeispielen jedoch auch zusätzliche Elemente oder Komponenten aufweisen.

Beispielsweise kann die Tragstruktur 20 einen hier nicht näher dargestellten Rahmen zur Halterung und/oder zum Aufspannen der Graphitfolie 22 aufweisen.

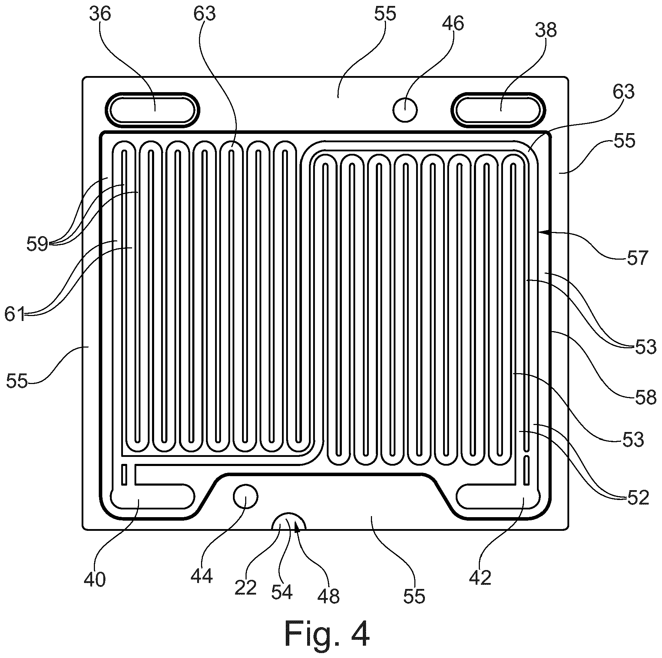

Auf der Tragstruktur 20 ist auf einer in Fig. 1 sichtbaren ersten Seite 24, vorliegend der Oberseite der Tragstruktur 20, ein erstes Strömungsprofil 30 angeordnet und/oder ausgebildet. Auf der Tragstruktur 20 ist auf der in Fig. 1 verdeckten, nur seitlich sichtbaren zweiten Seite 26, vorliegend der Unterseite der Tragstruktur 20, ein zweites Strömungsprofil 32 angeordnet und/oder ausgebildet. Das zweite Strömungsprofil 32 wird bezugnehmend auf Fig. 2 und Fig. 4 noch näher beschrieben.

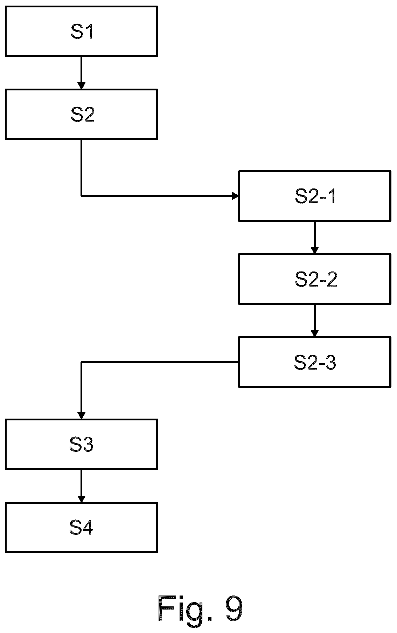

Die Strömungsprofile 30, 32 können beidseitig auf die Tragstruktur 20 mittels eines 3D-Druckverfahrens, insbesondere mittels eines 3D-Siebdruckverfahrens, das bezugnehmend auf Fig. 9 noch näher erläutert wird, aufgedruckt werden beziehungsweise aufgedruckt sein. Die Strömungsprofile 30, 32 können mit der Tragstruktur 20 insbesondere stoffschlüssig verbunden sein.

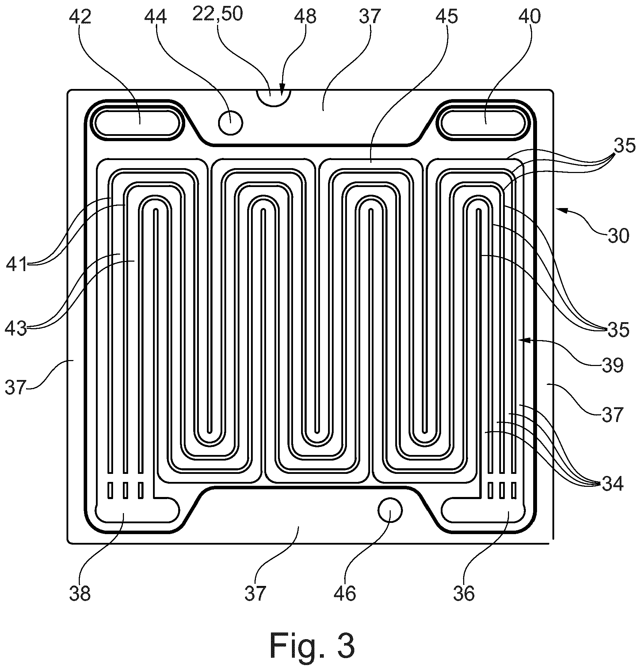

Die Ausgestaltung des ersten Strömungsprofils 30 kann auch anhand der Darstellung in Fig. 3 näher nachvollzogen werden.

Das erste Strömungsprofil 30 weist auf der ersten Seite 24 der Tragstruktur 20 Strömungskanäle 34 zur Verteilung eines der beiden an der Brennstoffzellenreaktion beteiligten Reaktanten auf. Die Strömungskanäle 34 können eine Kanalstruktur 39 bilden. Ferner kann das Strömungsprofil 30 Kanalwände 35 und/oder Kanalwandabschnitte 41 aufweisen. Zumindest ein Kanalabschnitt 43 des Strömungsprofils 30 und/oder der Kanalstruktur 39 und/oder ein Strömungskanal 34 kann seitlich durch Kanalwandabschnitte 41 und/oder bodenseitig durch die Tragstruktur 20 begrenzt sein.

Ferner können die Strömungskanäle 34 beziehungsweise die Kanalstruktur 39 und/oder ein Kanalabschnitt 43 bodenseitig zumindest abschnittsweise durch einen freiliegenden und vorliegend unbeschichteten Oberflächenabschnitt 45 der Tragstruktur 20 begrenzt sein. Ebenso können die Strömungskanäle 34 beziehungsweise die erste Kanalstruktur 39 und/oder ein Kanalabschnitt 43 bodenseitig zumindest abschnittsweise durch eine auf der Tragstruktur 20 aufgebrachte Druckschicht begrenzt sein. Im Bereich der Strömungskanäle 34 muss die Graphitfolie 22 mithin nicht freiliegend sein, kann jedoch freiliegend ausgebildet sein, wodurch die elektrische Leitfähigkeit der Bipolarplatte 10 verbessert werden kann.

In der vorliegenden Ausführungsform kann das Strömungsprofil 30 beispielsweise für den Transport und/oder die Verteilung des auf der Kathodenseite der Bipolarplatte 10 strömenden Oxidationsmittels vorgesehen und die erste Seite 24 der Tragstruktur 20 kann mithin als Kathodenseite ausgebildet sein.

Die Strömungskanäle 34 auf der ersten Seite 24 der Tragstruktur 20 können gruppenweise, insbesondere in einem Viererbündel, zumindest abschnittsweise parallel zueinander verlaufend ausgebildet sein. Ein solches Viererbündel kann meanderförmig von einer ersten Übergangsöffnung 36 zu einer zweiten Übergangsöffnung 38 verlaufen. Dadurch kann eine gute Verteilung des jeweiligen Reaktanten erreicht werden. Die beiden Übergangsöffnungen 36, 38 erlauben Fluidverbindungen zu den Kathodenseiten der jeweils in Stapel- beziehungsweise Stackrichtung nachfolgend oder vorhergehend angeordneten Bipolarplatten 10 in einem Brennstoffzellenstapel.

Die Übergangsöffnungen 36, 38 können als Bestandteil des ersten Strömungsprofils 30 und auch als Bestandteil des zweiten Strömungsprofils 32 einer Bipolarplatte 10 angesehen werden. In den Darstellungen der Fig. 1 bis 4 ist die Graphitfolie 22 der Tragstruktur 20 auch im Bereich der Übergangsöffnungen 36, 38 durchgehend ausgebildet, sodass die Übergangsöffnungen 36, 38 als noch verschlossene Öffnungen gezeigt sind. Nach dem Auftragen oder Drucken der Strömungsprofile 30, 32 auf die Tragstruktur 20 kann im Bereich der Übergangsöffnungen 36, 38 ein noch vorhandener Materialabschnitt der Graphitfolie 22 oder der Tragstruktur 20 entfernt werden, sodass die Übergangsöffnungen 36, 38 als zwischen den beiden Seiten 24, 26 der Bipolarplatte 10 beziehungsweise Tragstruktur 20 durchgehende Öffnungen ausgebildet werden.

Den Fig. 1 und 3 sind ferner zwei weitere Übergangsöffnungen 40, 42 zu entnehmen, die zum Durchlass des jeweils anderen Reaktanten, beispielsweise des einzusetzenden Brennstoffs, dienen können. Hierdurch kann eine Fluidverbindung zwischen den jeweils zweiten Strömungsprofilen 32, insbesondere auf den Anodenseiten, der in Stapel- beziehungsweise Stackrichtung nachfolgend oder vorhergehend angeordneten Bipolarplatten 10 in einem Brennstoffzellenstapel ermöglicht werden.

Die Übergangsöffnungen 40, 42 können als Bestandteil des ersten Strömungsprofils 30 und auch als Bestandteil des zweiten Strömungsprofils 32 angesehen werden. In den Darstellungen der Fig. 1 bis 4 ist die Graphitfolie 22 der Tragstruktur 22 auch im Bereich der Übergangsöffnungen 40, 42 durchgehend ausgebildet, sodass die Übergangsöffnungen 40, 42 als noch verschlossene Öffnungen gezeigt sind. Nach dem Auftragen oder Drucken der Strömungsprofile 30, 32 auf die Tragstruktur 20 kann im Bereich der Übergangsöffnungen 40, 42 ein noch vorhandener Materialabschnitt der Graphitfolie 22 oder der Tragstruktur 20 entfernt werden, sodass die Übergangsöffnungen 40, 42 als zwischen den beiden Seiten 24, 26 der Bipolarplatte 10 beziehungsweise der Tragstruktur 20 durchgehende Öffnungen ausgebildet werden.

Ferner kann die in den Fig. 1 bis 3 dargestellte Bipolarplatte 10 zwei außerhalb der Strömungsprofile 30, 32 beziehungsweise außerhalb der Strömungskanäle 34 jeweils in einem Randbereich 37 angeordnete Öffnungen 44, 46 aufweisen, die für den Durchlass und/oder für die seitliche Führung von Zugstäben - siehe hierzu Fig. 8 sowie die zugehörige Beschreibung - vorgesehen sein können.

In den Darstellungen der Fig. 1 bis 4 ist die Graphitfolie 22 der Tragstruktur 20 auch im Bereich der Öffnungen 44, 46 ausgebildet, sodass die Öffnungen 44, 46 als noch nicht durchgehende Öffnungen gezeigt sind. Nach dem Auftragen oder Drucken der Strömungsprofile 30, 32 auf die Tragstruktur 20 kann im Bereich der Öffnungen 44, 46 ein noch vorhandener Materialabschnitt der Graphitfolie 22 oder der Tragstruktur 20 entfernt werden, sodass die Öffnungen 44, 46 als zwischen den beiden Seiten 24, 26 der Bipolarplatte durchgehende Öffnungen ausgebildet werden.

Schließlich kann auf einer Seite 22, 24 oder auf beiden Seiten 22, 24 der Bipolarplatte 10 in einem Randbereich 37 eine Aussparung 48 vorgesehen sein. Die Aussparung 48 kann dadurch gebildet sein, dass die Graphitfolie 22 im Bereich der Aussparung 48 freiliegend ist, mithin im Bereich der Aussparung 48 beispielsweise unbedruckt bleibt. Die Aussparung 48 kann beispielsweise eine elektrische Kontaktstelle 50, insbesondere eine elektrische Klemmkontaktstelle, bilden.

In dem vorliegenden Ausführungsbeispiel können die Strömungskanäle 34 des ersten Strömungsprofils 30 an der Übergangsöffnung 36 eine kleinere Breite $b_{K1}$ und damit einen geringeren Querschnitt aufweisen als an der Übergangsöffnung 38. Die Strömungskanäle 34 können sich demnach kontinuierlich entlang ihrer Erstreckung zwischen den Übergangsöffnungen 36, 38 verbreitern. Die Fluidführung entlang der Strömungskanäle 34 kann auf diese Weise begünstigt werden. Insbesondere kann hierdurch die Abführung von Wasser beziehungsweise Wasserdampf als Reaktionsprodukt vereinfacht werden.

Fig. 2 zeigt die Bipolarplatte 10 in einer perspektivischen Explosionsdarstellung. Das erste Strömungsprofil 30, die Graphitfolie 22 und das zweites Strömungsprofil 32 sind einzeln und getrennt übereinander angeordnet dargestellt. Es ist zu erkennen, dass in beiden Strömungsprofilen 30, 32 die jeweiligen Übergangsöffnungen 36, 38, 40, 42 derart an gegenüberliegenden Seiten der Tragstruktur 20 angeordnet sind, dass ein ungehinderter Fluidstrom durch die Übergangsöffnungen 36, 38, 40, 42 erfolgen kann, soweit in den entsprechenden Bereichen auch Öffnungen in der Graphitfolie 22 beziehungsweise Tragstruktur 20 vorgesehen werden.

Die Graphitfolie 22 ist, wie voranstehend bereits erwähnt, in ihrem Rohzustand dargestellt. Im Bereich der Übergangsöffnungen 36, 38, 40, 42 sind entsprechende Öffnungen beziehungsweise Durchbrüche auch in der Graphitfolie 22 der Tragstruktur 20 vorzusehen, beispielsweise nach dem Aufdrucken der Strömungsprofile 30, 32. Dies gilt gleichermaßen für den Bereich der Öffnungen 44, 46.

In der vorliegenden Ausführungsform dient die zweite Seite 26 der Tragstruktur 20 beispielsweise als Anodenseite einer benachbart anzuordnenden Brennstoffzelle eines Brennstoffzellenstapels 1.

Das zweite Strömungsprofil 32 weist zweite Strömungskanäle 52 auf. Die Strömungskanäle 52 können insbesondere eine zweite Kanalstruktur 57 bilden. Ferner kann das Strömungsprofil 32 Kanalwände 53 und/oder Kanalwandabschnitte 59 aufweisen. Zumindest ein Kanalabschnitt 61 des Strömungsprofils 32 und/oder der Kanalstruktur 57 und/oder ein Strömungskanal 52 kann seitlich durch Kanalwandabschnitte 59 und/oder bodenseitig durch die Tragstruktur 20 begrenzt sein.

Ferner können die Strömungskanäle 52 beziehungsweise die Kanalstruktur 57 und/oder ein Kanalabschnitt 61 bodenseitig zumindest abschnittsweise durch einen freiliegenden und vorliegend unbeschichteten Oberflächenabschnitt 63 der Tragstruktur 20 begrenzt sein. Ebenso können die Strömungskanäle 52 beziehungsweise die erste Kanalstruktur 57 und/oder ein Kanalabschnitt 61 bodenseitig zumindest abschnittsweise durch eine auf der Tragstruktur 20 aufgebrachte Druckschicht begrenzt sein. Im Bereich der Strömungskanäle 52 muss die Graphitfolie 22 mithin nicht freiliegend sein, kann jedoch freiliegend ausgebildet sein, wodurch die elektrische Leitfähigkeit der Bipolarplatte 10 verbessert werden kann.

Eine Breite $b_{K2}$ der zweiten Strömungskanäle 52 kann entlang der Erstreckung zwischen den Übergangsöffnungen 40, 42 konstant ausgebildet sein. In der vorliegenden Ausführungsform können die Strömungskanäle 52 des zweiten Strömungsprofils 32 zur Führung des jeweils einzusetzenden Brennstoffs dienen, insbesondere Wasserstoff. Um die elektrische Leitung zu verbessern, können die Strömungskanäle 52 des zweiten Strömungsprofils 32 bodenseitig zumindest abschnittsweise durch einen freiliegenden und unbeschichteten Oberflächenabschnitt 63 der Tragstruktur 20 begrenzt sein, wie voranstehend erwähnt.

Bei den Strömungskanälen 52 des zweiten Strömungsprofils 32 kann es sich um zwei einzelne Strömungskanälen 52 handeln, die jeweils ausgehend von einer dritten Übergangsöffnung 40 zu einer vierten Übergangsöffnung 42 verlaufen. Jeder der beiden einzelnen Strömungskanäle 52 durchläuft meanderförmig eine der beiden Hälften des Strömungsprofils 32.

Es versteht sich, dass auch andere Verläufe der Strömungskanäle 52 und auch andere Verläufe der Strömungskanäle 34 realisiert werden können.

Die Strömungskanäle 34 des ersten Strömungsprofils 30 werden untereinander wiederum durch Kanalwände 35 getrennt. Die Strömungskanäle 52 des zweiten Strömungsprofils 32 werden untereinander durch Kanalwände 53 getrennt. Ferner werden die Strömungskanäle 34 des ersten Strömungsprofils 30 von dem Randbereich 37 und die Strömungskanäle 52 des zweiten Strömungsprofils 32 von dem Randbereich 55 umgeben.

Die Kanalwände 35, 53 und Randbereiche 37, 55 weisen dabei in dem vorliegenden Ausführungsbeispiel eine Strömungsprofildicke $d_{30}$, $d_{32}$ der beiden Strömungsprofile 30, 32 auf und sind damit gleich dick beziehungsweise gleich hoch ausgebildet. Die Unterschiedlichen Abschnitte der Strömungsprofile 30, 32 können jedoch auch unterschiedliche Dicken beziehungsweise Höhen aufweisen.

Auf der gegenüberliegenden Seite der Tragstruktur 20 im Bereich der Kontaktstelle 50 kann ebenfalls eine Aussparung 48 vorgesehen sein, um eine Kontaktstelle 54 auszubilden. Damit kann die Graphitfolie 22 der Tragstruktur 20 im Bereich der Kontaktstellen 50, 54 beidseitig beispielsweise von einer elektrisch leitfähigen Klemme kontaktiert werden.

Die Fig. 3 und 4 zeigen die in Fig. 2 dargestellten Strömungsprofile 30, 32 jeweils in einer Draufsicht.

Die Strömungsprofile 30, 32 können in dem vorliegenden Ausführungsbeispiel offen porös ausgebildet sein. Dabei weisen die Strömungsprofile eine Porosität $\Phi$ von über 10% auf. Es können bevorzugt auch Ausführungen der Strömungsprofile 30, 32 mit einer Porosität $\Phi$ von über 15%, weiter bevorzugt von über 20%, weiter bevorzugt von über 25%, weiter bevorzugt von über 30%, weiter bevorzugt von über 35%, weiter bevorzugt von über 40%, weiter bevorzugt von über 50%, weiter bevorzugt von über 55% vorgesehen sein, wobei die Porosität $\Phi$ gebildet ist als Verhältnis $\Phi = V_H / V$, wobei $V_H$ das Hohlraumvolumen, V das Gesamtvolumen bestehend aus $V_H$ und VF und $V_F$ das Feststoffvolumen ist.

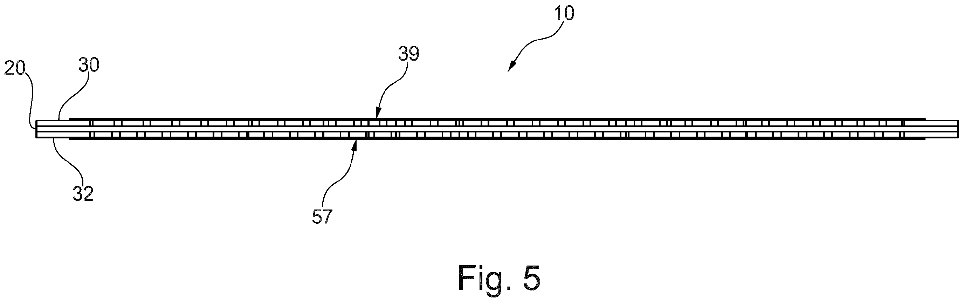

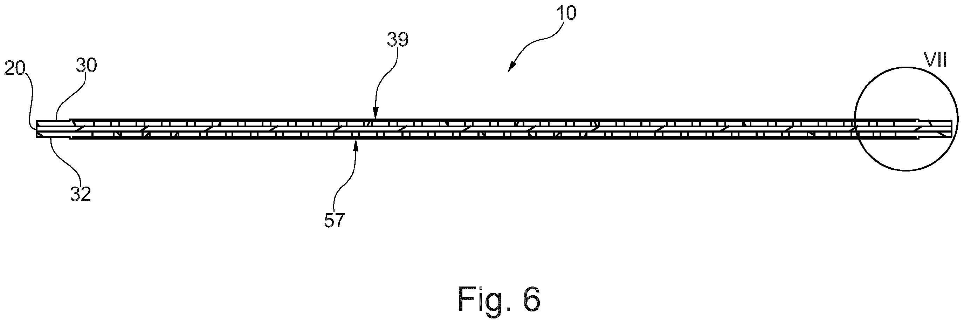

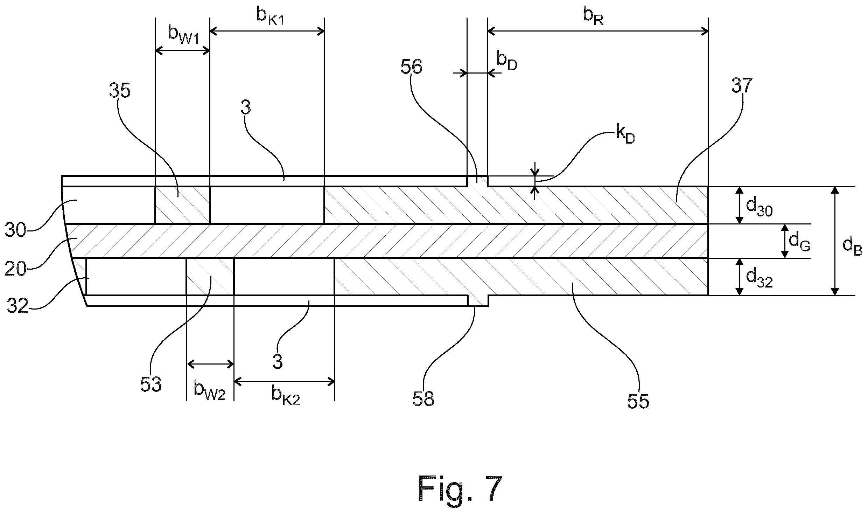

In Fig. 5 ist die Bipolarplatte 10 in einer Seitenansicht gezeigt und in Fig. 6 ist die Bipolarplatte 10 in einer Schnittdarstellung gezeigt. In Fig. 6 ist ein Detailbereich mit der Ziffer VII markiert, der in Fig. 7 vergrößert dargestellt ist.

Im Einsatz wird angrenzend an eine Bipolarplatte 10 jeweils eine sogenannte Membran Elektronen Anordnung 3 (MEA, engl. "Membrane Electrode Assembly") - wie in Fig. 8 dargestellt - angeordnet. Die MEA 3 bedeckt die jeweiligen Strömungskanäle 34, 52 bevorzugt vollständig. Um die Dichtigkeit zu erhöhen, kann die Bipolarplatte 10 umlaufende Dichtungswulste 56, 58 aufweisen. Die Dichtungswulste 56, 58 können bei den jeweiligen Herstellungsschritten der Strömungsprofile 30, 32 mitaufgedruckt oder gesondert vorgesehen werden.

In Fig. 7 sind anhand des Detailbereichs VII die Abmessungen der Bipolarplatte 10 des vorliegenden Ausführungsbeispiels eingetragen.

Die Gesamtdicke $d_B$ der Bipolarplatte 10, das heißt eines Gesamtaufbaus aus Tragstruktur 20 und einem der Strömungsprofile 30, 32 oder den beiden Strömungsprofilen 30, 32, hingegen ohne Berücksichtigung der Dichtungswulste 56, 58, kann in dem vorliegenden Ausführungsbeispiel 1,75 mm betragen und/oder eine solche Gesamtdicke $d_B$ kann in einem bevorzugten Bereich von 1 mm bis 2,5 mm, bevorzugt von 1,2 mm bis 2,3 mm, weiter bevorzugt von 1,3 mm bis 2,2 mm, weiter bevorzugt von 1,4 mm bis 2,1 mm, weiter bevorzugt von 1,5 mm bis 2 mm, weiter bevorzugt von 1,6 mm bis 1,9 mm liegen.

Über die Gesamtdicke $d_B$ hinaus ragen vorliegend und beispielhaft lediglich die beidseitig angeordneten Dichtungswulste 56, 58. Die Dichtungswulste 56, 58 können in dem vorliegenden Ausführungsbeispiel eine Höhe $h_D$ von 0,15 mm aufweisen und/oder eine solche Höhe $h_D$ kann in einem bevorzugten Bereich von 0,05 mm bis 0,25 mm, bevorzugt von 0,06 mm bis 0,24 mm, weiter bevorzugt von 0,07 mm bis 0,23 mm, weiter bevorzugt von 0,08 mm bis 0,22 mm, weiter bevorzugt von 0,09 mm bis 0,21 mm, weiter bevorzugt von 0,1 mm bis 0,2 mm liegen.

Eine erste Strömungsprofildicke $d_{30}$ des ersten Strömungsprofils 30 kann in dem vorliegenden Ausführungsbeispiel 0,55 mm betragen und/oder eine solche Strömungsprofildicke $d_{30}$ kann in einem bevorzugten Bereich von 0,25 mm bis 1 mm, bevorzugt von 0,28 mm bis 0,97 mm, weiter bevorzugt von 0,31 mm bis 0,94 mm, weiter bevorzugt von 0,34 mm bis 0,91 mm, weiter bevorzugt von 0,37 mm bis 0,88 mm, weiter bevorzugt von 0,4 mm bis 0,85 mm liegen.

Eine zweite Strömungsprofildicke $d_{32}$ des zweiten Strömungsprofils 32 kann in dem vorliegenden Ausführungsbeispiel 0,55 mm betragen und/oder eine solche Strömungsprofildicke $d_{32}$ kann in einem bevorzugten Bereich von 0,25 mm bis 1 mm, bevorzugt von 0,28 mm bis 0,97 mm, weiter bevorzugt von 0,31 mm bis 0,94 mm, weiter bevorzugt von 0,34 mm bis 0,91 mm, weiter bevorzugt von 0,37 mm bis 0,88 mm, weiter bevorzugt von 0,4 mm bis 0,85 mm liegen.

Die ersten Kanalwände 35 des ersten Strömungsprofils 30 können eine Breite $b_{W1}$ von 0,8 mm aufweisen und/oder eine solche Breite $b_{W1}$ kann in einem bevorzugten Bereich von 0,5 mm bis 1,1 mm, bevorzugt von 0,55 mm bis 1,05 mm, weiter bevorzugt von 0,6 mm bis 1 mm, weiter bevorzugt von 0,65 mm bis 0,95 mm, weiter bevorzugt von 0,7 mm bis 0,9 mm, weiter bevorzugt von 0,75 mm bis 0,85 mm liegen.

Die zweiten Kanalwände 53 des zweiten Strömungsprofils 32 können eine Breite $b_{W2}$ von 0,7 mm aufweisen und/oder eine solche Breite $b_{W2}$ kann in einem bevorzugten Bereich von 0,4 mm bis 1 mm, bevorzugt von 0,45 mm bis 0,95 mm, weiter bevorzugt von 0,5 mm bis 0,9 mm, weiter bevorzugt von 0,55 mm bis 0,85 mm, weiter bevorzugt von 0,55 mm bis 0,8 mm, weiter bevorzugt von 0,65 mm bis 0,75 mm liegen.

Die ersten Strömungskanäle 34 können eine Breite $b_{K1}$ aufweisen. Insbesondere können die ersten Strömungskanäle 34 an der als Einlass dienenden ersten Übergangsöffnung 36 eine Breite $b_{K1e}$ von 1,475 mm aufweisen und/oder eine solche Breite $b_{K1e}$ kann in einem bevorzugten Bereich von 1 mm bis 2 mm, bevorzugt von 1,1 mm bis 1,9 mm, weiter bevorzugt von 1,1 mm bis 1,8 mm, weiter bevorzugt von 1,2 mm bis 1,7 mm, weiter bevorzugt von 1,3 mm bis 1,6 mm, weiter bevorzugt von 1,4 mm bis 1,5 mm liegen.

Die ersten Strömungskanäle 34 können ferner an dem als Auslass dienenden zweiten Übergangsöffnung 38 eine Breite $b_{K1a}$ von 2,125 mm aufweisen und/oder eine solche Breite $b_{K1a}$ kann in einem bevorzugten Bereich von 1,7 mm bis 2,7 mm, bevorzugt von 1,8 mm bis 2,6 mm, weiter bevorzugt von 1,8 mm bis 2,5 mm, weiter bevorzugt von 1,9 mm bis 2,4 mm, weiter bevorzugt von 2 mm bis 2,3 mm, weiter bevorzugt von 2,1 mm bis 2,2 mm liegen.

In dem vorliegenden Ausführungsbeispiel kann eine Breitenänderung der ersten Strömungskanäle 34 linear oder kontinuierlich verlaufen, es können aber auch andere Funktionen die Grundlage für den Verlauf einer solchen Breitenänderung sein. Beispielsweise kann in einem Einlassbereich die Änderung der Breite $b_{K1}$ geringer sein als in einem Auslassbereich.

Die zweiten Strömungskanäle 52 können eine Breite $b_{K2}$ aufweisen. Insbesondere können die zweiten Strömungskanäle 52 eine Breite $b_{K2}$ aufweisen, die zumindest abschnittsweise geringer ist als die Breite $b_{K1}$ der ersten Strömungskanäle 34. Die zweiten Strömungskanäle 52 können zumindest abschnittsweise eine Breite $b_{K2}$ in einem bevorzugten Bereich von 1 mm bis 2 mm, bevorzugt von 1,1 mm bis 1,9 mm, weiter bevorzugt von 1,1 mm bis 1,8 mm, weiter bevorzugt von 1,2 mm bis 1,7 mm, weiter bevorzugt von 1,3 mm bis 1,6 mm, weiter bevorzugt von 1,4 mm bis 1,5 mm aufweisen.

Darüber hinaus kann der Randbereich 37 des ersten Strömungsprofils 30 zumindest abschnittsweise eine Breite $b_R$ von 3,25 mm aufweisen und/oder eine solche Breite $b_R$ kann in einem bevorzugten Bereich von 2,5 mm bis 4 mm, bevorzugt von 2,6 mm bis 3,9 mm, weiter bevorzugt von 2,7 mm bis 3,8 mm, weiter bevorzugt von 2,8 mm bis 3,7 mm, weiter bevorzugt von 2,9 mm bis 3,6 mm, weiter bevorzugt von 3 mm bis 3,5 mm liegen. Der Randbereich 55 des zweiten Strömungsprofils 32 kann zumindest abschnittsweise der Breite des Randbereichs 37 des ersten Strömungsprofils 30 entsprechen.

Schließlich können die beiden Dichtungswulste 56, 58 eine Breite $b_D$ von 0,3 mm aufweisen und/oder eine solche Breite $b_D$ kann in einem bevorzugten Bereich von 0,2 mm bis 0,4 mm, bevorzugt von 0,21 mm bis 0,39 mm, weiter bevorzugt von 0,22 mm bis 0,38 mm, weiter bevorzugt von 0,23 mm bis 0,37 mm, weiter bevorzugt von 0,24 mm bis 0,36 mm, weiter bevorzugt von 0,25 mm bis 0,35 mm liegen.

Ferner kann die Graphitfolie 22 eine Dicke dc von 0,5 mm aufweisen und/oder eine solche Dicke $d_G$ kann in einem bevorzugten Bereich von 0,1 mm bis 2 mm, bevorzugt von 0,2 mm bis 1,5 mm, weiter bevorzugt von 0,3 mm bis 1 mm, weiter bevorzugt von 0,4 mm bis 0,8 mm, weiter bevorzugt von 0,4 mm bis 0,7 mm, weiter bevorzugt von 0,4 mm bis 0,6 mm liegen.

Fig. 8 zeigt einen erfindungsgemäßen Brennstoffzellenstapel 1 mit einer Vielzahl von in Reihe angeordneter Elektrodenplatten 2 in einer schematischen Darstellung. Der Brennstoffzellenstapel 1 weist eine Vielzahl Elektrodenplatten 2 auf, von denen zwei als Endplatten 12, 14 ausgebildet sind, die übrigen Elektrodenplatten 2 sind als Bipolarplatten 10 ausgebildet, beispielsweise Bipolarplatten 10 wie in den Fig. 1 bis 7 beschrieben. Die erste Elektrodenplatte 2 kann dabei als Kathodenendplatte 12 und die letzte Elektrodenplatte 2 als Anodenendplatte 14 ausgebildet sein.

Zwischen zwei benachbarten Elektrodenplatten 2 ist jeweils eine Elektronen Membran Anordnung 3 (MEA) angeordnet. Der Brennstoffzellenstapel 1 kann einen Brennstoffzufluss 4, einen Oxidationsmittelzufluss 5, einen Brennstoffabfluss 6 und einen Oxidationsmittel- und Wasserabfluss 7 aufweisen. Zur Befestigung dienen mehrere Zugstäbe 8, die durch die voranstehend beschriebenen Öffnungen 44, 46 gesteckt und/oder geführt sein können.

In Fig. 9 ist ein Ablaufdiagramm eines erfindungsgemäßen Verfahrens 100 dargestellt. Die Schritte zur Herstellung einer Elektrodenplatte 2 mit einem Strömungsprofil 30, 32, insbesondere einer Bipolarplatte 10, werden im Folgenden beschrieben.

Zunächst wird eine Graphitfolie 22 in einem ersten Schritt S1 bereitgestellt.

Die Graphitfolie 22 wird dann in Schritt S2 mit einer Druckpaste bedruckt, insbesondere im Wege des 3D-Siebdrucks.

Dabei wird in einem Schritt S2-1 ein Strömungsprofil 30 auf die Graphitfolie 22 gedruckt, insbesondere in mehreren aufeinanderfolgenden Einzeldruckschritten und gegebenenfalls unter Verwendung unterschiedlicher Drucksiebe und/oder Druckschablonen. Zwischen den jeweiligen Einzeldruckschritten kann eine Trocknung beziehungsweise Aushärtung der jeweils zuvor gedruckten Druckschicht vorgenommen werden, beispielsweise durch Einsatz von Ultraviolettlicht und/oder Konvektionstrocknung.

Nachdem das erste Strömungsprofil 30 in ausreichender stärke auf der Graphitfolie 22 aufgedruckt und/oder stoffschlüssig verbunden worden ist, kann der Verbund aus Graphitfolie 22 und erstem Strömungsprofil 30 in einem Schritt S2-2 gewendet werden.

Anschließend kann in einem Schritt S2-3 auf die andere Seite der Graphitfolie 22 ein zweites Strömungsprofil 32 aufgedruckt werden. Auch das Aufdrucken des zweiten Strömungsprofils 32 kann in mehreren aufeinanderfolgenden Einzeldruckschritten und gegebenenfalls unter Verwendung unterschiedlicher Drucksiebe und/oder Druckschablonen erfolgen. Zwischen den jeweiligen Einzeldruckschritten zur Herstellung des zweiten Strömungsprofils 32 kann wiederum eine Trocknung beziehungsweise Aushärtung der jeweils zuvor gedruckten Druckschicht vorgenommen werden, beispielsweise durch Einsatz von Ultraviolettlicht und/oder Konvektionstrocknung.

Nach dem Aufdrucken der Strömungsprofile 30, 32 kann die Bipolarplatte 10 in Schritt S3 aus der jeweiligen 3D-Siebdruckanlage entnommen werden.

Soweit die verwendete Graphitfolie 22 keine Öffnungen im Bereich der Übergangsöffnungen 36, 38, 40, 42 aufweist, können diese in einem weiteren Schritt S4 in die Graphitfolie eingebracht werden, sodass die Übergangsöffnungen 36, 38, 40, 42 als Durchgangsöffnungen die Graphitfolie 22 beziehungsweise die Tragstruktur 20 durchbrechen und zwischen den beiden Seiten 24, 26 der Tragstruktur 20 verlaufen.

In den vorliegenden Ausführungsbeispielen kann die bereitgestellte Graphitfolie aus expandiertem Naturgraphit bestehen und kann einen Massenanteil an Kohlenstoff von mehr als 99,9 % aufweisen. Daneben kann die Graphitfolie einen Massenanteil an Asche von weniger als 0,1 % aufweisen. Weiterhin kann die Graphitfolie einen Massenanteil an Schwefel von weniger als 0,01 % aufweisen. Ferner kann die Graphitfolie einen Massenanteil an Chlorid von weniger als 0,01 % aufweisen. Schließlich kann die Graphitfolie einen Massenanteil an Halogen von weniger als 0,001 % aufweisen.

In den vorliegenden Ausführungsbeispielen kann für die Herstellung der Strömungsprofile 30, 32 eine durch Ultraviolettlicht aushärtbare Druckpaste mit den folgenden Bestandteilen in Massenprozent verwendet werden:

- Aluminiumnitrid: 77,76 %
- Polyethylene Glycol (200) Diacrylat: 11,64 %
- Aliphatisches Urethan-Acrylat: 8,6 %
- Tertiobutyl Cyclohexyl Acrylat: 1 %
- Harnstofflösung: 1 %
- unvermeidbare Verunreinigungen.

Alternativ kann für die Herstellung der Strömungsprofile 30, 32 eine lösungsmittelbasierte Druckpaste mit den folgenden Bestandteilen in Massenprozent verwendet werden:

- Graphit: 39,3 %
- Dipropylen Glycol Methyl Ether: 42,3 %
- Polyvinylbutyral: 4,7 %
- Polyglykolester: 4,6 %
- rheologisches Additiv: 0,9 %
- unvermeidbare Verunreinigungen.

Auch eine voranstehend beschriebene lösungsmittelbasierte Druckpaste kann ohne oder mit nur geringer thermischer Belastung ausgehärtet werden.

Eine thermisch belastende Nachbearbeitung, wie zum Beispiel das Sintern, kann bei der Nutzung derartiger Druckpasten vermieden und damit eine Beeinträchtigung oder Beschädigung der Graphitfolie verhindert werden.

**Bezugszeichenliste**

1 Brennstoffzellenstapel
2 Elektrodenplatten
3 Membran Elektroden Anordnung (MEA)
4 Brennstoffzufluss
5 Oxidationsmittelzufluss
6 Brennstoffabfluss
7 Oxidationsmittel- und Wasserabfluss
8 Zugstäbe
10 Bipolarplatte
12 Endplatte (Kathodenplatte)
14 Endplatte (Anodenplatte)
20 Tragstruktur
22 Graphitfolie

24 erste Seite der Tragstruktur
26 zweite Seite der Tragstruktur
30 erstes Strömungsprofil (der ersten Seite 24)
32 zweites Strömungsprofil (der zweiten Seite 26)
34 Strömungskanal (des ersten Strömungsprofils 30)
35 Kanalwand
36 erste Übergangsöffnung
37 Randbereich
38 zweite Übergangsöffnung
39 erste Kanalstruktur
40 dritte Übergangsöffnung
41 Kanalwandabschnitt
42 vierte Übergangsöffnung
43 Kanalabschnitt
44 Öffnung
45 Oberflächenabschnitt der Tragstruktur
46 Öffnung
48 Aussparung
50 Kontaktstelle
52 Strömungskanal (des zweiten Strömungsprofils)
53 Kanalwand
54 Kontaktstelle
55 Randbereich
56 Dichtungswulst
57 zweite Kanalstruktur
58 Dichtungswulst
59 Kanalwandabschnitt
61 Kanalabschnitt
63 Oberflächenabschnitt der Tragstruktur

$d_B$ Gesamtdicke der Bipolarplatte 10
$d_G$ Dicke der Graphitschicht 22
$d_{30}$ Strömungsprofildicke
$d_{32}$ Strömungsprofildicke
$h_D$ Höhe eines Dichtungswulstes 56, 58
$b_R$ Breite eines Randbereichs 37, 55
$b_D$ Breite eines Dichtungswulstes 56, 58
$b_K$ Breite eines Strömungskanals
$b_{K1}$ Breite eines Strömungskanals 34
$b_{K1e}$ Breite eines Strömungskanals 34 am Einlass
$b_{K1a}$ Breite eines Strömungskanals 34 am Auslass
$b_{K2}$ Breite eines Strömungskanals 52
$b_{W1}$ Breite einer Kanalwand 35
$b_{W2}$ Breite einer Kanalwand 53

S1 Bereitstellen einer Graphitfolie
S2 Aufdrucken von Strömungsprofilen
S2-1 Drucken eines ersten Strömungsprofils
S2-2 Wenden der Tragstruktur
S2-3 Drucken eines zweiten Strömungsprofils
S3 Entnahme der Bipolarplatte
S4 Erzeugen von Öffnungen in der Graphitfolie

**Patentansprüche**

1. Bipolarplatte (10), insbesondere für einen Brennstoffzellenstapel (1), mit einer elektrisch leitfähigen Tragstruktur (20) und mit einem auf der Tragstruktur (20) ausgebildeten Strömungsprofil (30, 32) zur Fluidführung, **dadurch gekennzeichnet, dass** die Tragstruktur (20) eine Graphitfolie (22) aufweist und/oder als Graphitfolie (22) ausgebildet ist.

2. Bipolarplatte nach Anspruch 1, **dadurch gekennzeichnet, dass** die Graphitfolie (22) eine Dicke ($d_G$) von 0,1 mm bis 2 mm, bevorzugt von 0,2 mm bis 1,5 mm, weiter bevorzugt von 0,3 mm bis 1 mm, weiter bevorzugt von 0,4 mm bis 0,8 mm, weiter bevorzugt von 0,4 mm bis 0,7 mm, weiter bevorzugt von 0,4 mm bis 0,6 mm aufweist.

3. Bipolarplatte nach einem der vorangehenden Ansprüche, **dadurch gekennzeichnet, dass** beidseitig auf der Tragstruktur (20) ein Strömungsprofil (30, 32) zur Fluidführung ausgebildet ist und/oder dass das Strömungsprofil (30, 32) mittels additiver Fertigung, insbesondere mittels 3D-Siebdrucks, auf die Tragstruktur (20) aufgebracht ist.

4. Bipolarplatte nach einem der vorangehenden Ansprüche, **dadurch gekennzeichnet, dass** das Strömungsprofil (30, 32) aus einem anderen Werkstoff oder anderen Werkstoffen gebildet ist als die Tragstruktur (20) und/oder dass das Strömungsprofil (30, 32) eine andere Werkstoffzusammensetzung aufweist als die Tragstruktur (20).

5. Bipolarplatte nach einem der vorangehenden Ansprüche, **dadurch gekennzeichnet, dass** das Strömungsprofil (30, 32) zumindest abschnittsweise porös, insbesondere zumindest teilweise oder vollständig offen porös, ausgebildet ist und/oder dass das Strömungsprofil (30, 32) eine raue Oberfläche aufweist.

6. Bipolarplatte nach einem der vorangehenden Ansprüche, **dadurch gekennzeichnet,** das Strömungsprofil (30, 32) eine Porosität $\Phi$ von über 10%, bevorzugt über 15%, weiter bevorzugt von über 20%, weiter bevorzugt von über 25%, weiter bevorzugt von über 30%, weiter bevorzugt von über 35%, weiter bevorzugt von über 40%, weiter bevorzugt von über 50%, weiter bevorzugt von über 55% aufweist, wobei die Porosität $\Phi$ gebildet ist als Verhältnis

$$\Phi = V_H / V$$

mit

V$_H$ = Hohlraumvolumen
V = Gesamtvolumen bestehend aus $V_H$ und $V_F$
V$_F$ = Feststoffvolumen

7. Bipolarplatte nach einem der vorangehenden Ansprüche, **dadurch gekennzeichnet,** das Strömungsprofil (30, 32) eine Porosität $\Phi$ von unter 90%, weiter bevorzugt von unter 80%, weiter bevorzugt von unter 70%, weiter bevorzugt von unter 60%, weiter bevorzugt von unter 50%, weiter bevorzugt von unter 40%, aufweist, wobei die Porosität $\Phi$ gebildet ist als Verhältnis

$$\Phi = V_H / V$$

mit

V$_H$ = Hohlraumvolumen
V = Gesamtvolumen bestehend aus $V_H$ und $V_F$
V$_F$ = Feststoffvolumen

8. Bipolarplatte nach einem der vorangehenden Ansprüche, **dadurch gekennzeichnet, dass** das Strömungsprofil (30, 32) aus einer durch Ultraviolettlicht aushärtenden Druckpaste erzeugt ist.

9. Bipolarplatte nach einem der vorangehenden Ansprüche 1 bis 7, **dadurch gekennzeichnet, dass** das Strömungsprofil (30, 32) aus einer lösungsmittelbasierten Druckpaste erzeugt ist.

10. Bipolarplatte nach einem der vorangehenden Ansprüche, **dadurch gekennzeichnet, dass** das Strömungsprofil (30, 32) aus einer einen Keramikwerkstoff, insbesondere Aluminiumnitrid und/oder Aluminiumoxid, aufweisenden Druckpaste erzeugt ist und/oder dass das Strömungsprofil aus einer ein Keramikpulver, insbesondere Aluminiumnitrid und/oder Aluminiumoxid in Pulverform, aufweisenden Druckpaste erzeugt ist.

11. Bipolarplatte nach einem der Ansprüche 3 bis 10, **dadurch gekennzeichnet, dass** das Strömungsprofil (30, 32) aus einer einen Graphitwerkstoff aufweisenden Druckpaste erzeugt ist und/oder dass das Strömungsprofil aus einer Graphitpulver aufweisenden Druckpaste erzeugt ist.

12. Elektrodenplatte (2), insbesondere für einen Brennstoffzellenstapel (1), mit einer elektrisch leitfähigen Tragstruktur (20) und mit einem auf der Tragstruktur (20) ausgebildeten Strömungsprofil (30, 32) zur Fluidführung, **dadurch gekennzeichnet, dass** die Tragstruktur eine Graphitfolie (22) aufweist und/oder als Graphitfolie (22) ausgebildet ist.

13. Brennstoffzellenstapel (1) zur Erzeugung von elektrischem Strom, mit einer Mehrzahl von Bipolarplatten (10) nach einem der Ansprüche 1 bis 11 und/oder mit einer Mehrzahl von Elektrodenplatten (2) nach Anspruch 12.

14. Verfahren zur Herstellung einer Bipolarplatte, insbesondere nach einem der vorangehenden Ansprüche 1 bis 11,

   - bei dem als Tragstruktur (20) eine Graphitfolie (22) bereitgestellt wird und
   - bei dem auf die Graphitfolie (22) ein Strömungsprofil (30, 32) zur Fluidführung mittels additiver Fertigung, insbesondere mittels eines 3D-Siebdruckverfahrens, aufgedruckt wird.

15. Verfahren nach Anspruch 14, **dadurch gekennzeichnet, dass** eine erste Seite (24) der Graphitfolie (22) mit einem Strömungsprofil (30, 32) bedruckt wird, die Graphitfolie gewendet wird und anschließend eine zweite Seite (26) der Graphitfolie (22) mit einem Strömungsprofil (30, 32) bedruckt wird.

Fig. 1

Fig. 2

Fig. 3

Fig. 4

Fig. 5

Fig. 6

EP 4 668 375 A1

Fig. 7

Fig. 8

EP 4 668 375 A1

Fig. 9

EUROPÄISCHER RECHERCHENBERICHT

Europäisches Patentamt
European Patent Office
Office européen des brevets

Nummer der Anmeldung

EP 24 18 2943

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 078 408 B1 (BALLARD POWER SYSTEMS [CA]) 27. März 2002 (2002-03-27) | 1-9, 11-15 | INV. H01M8/0213 |
| Y | * Abbildungen 2-5,8 * | 10 | H01M8/0215 |
| | * Absätze [0023], [0024], [0049] - [0057], [0061] * | | H01M8/0228 |
| | ----- | | H01M8/0234 |
| X | US 5 300 370 A (WASHINGTON KIRK B [CA] ET AL) 5. April 1994 (1994-04-05) | 1-5,8,9, 12,13 | ADD. H01M8/10 |
| Y | * Spalte 5, Zeilen 35-39; Abbildungen 3,4,10 * | 10 | |
| | ----- | | |
| Y | US 2021/226227 A1 (GU ZHIJUN [CN]) 22. Juli 2021 (2021-07-22) | 10 | |
| | * Absätze [0003], [0051], [0080], [0081] * | | |
| | ----- | | |
| A | WO 2018/108546 A2 (BOSCH GMBH ROBERT [DE]) 21. Juni 2018 (2018-06-21) | 1-15 | |
| | ----- | | |

RECHERCHIERTE SACHGEBIETE (IPC)

H01M

Der vorliegende Recherchenbericht wurde für alle Patentansprüche erstellt

| Recherchenort | Abschlußdatum der Recherche | Prüfer |
|---|---|---|
| München | 3. Dezember 2024 | Jacquinot, Patrick |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 18 2943

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-12-2024

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 1078408 | B1 | | 27-03-2002 | AT | E215266 | T1 | 15-04-2002 |
| | | | | AU | 3618199 | A | 16-11-1999 |
| | | | | CA | 2329729 | A1 | 04-11-1999 |
| | | | | DE | 69901103 | T2 | 21-11-2002 |
| | | | | EP | 1078408 | A1 | 28-02-2001 |
| | | | | GB | 2336712 | A | 27-10-1999 |
| | | | | WO | 9956333 | A1 | 04-11-1999 |
| US 5300370 | A | | 05-04-1994 | AU | 5415994 | A | 08-06-1994 |
| | | | | US | 5300370 | A | 05-04-1994 |
| | | | | WO | 9411912 | A1 | 26-05-1994 |
| US 2021226227 | A1 | | 22-07-2021 | CN | 111029609 | A | 17-04-2020 |
| | | | | CN | 209016193 | U | 21-06-2019 |
| | | | | EP | 3864720 | A1 | 18-08-2021 |
| | | | | US | 2021226227 | A1 | 22-07-2021 |
| | | | | WO | 2020073238 | A1 | 16-04-2020 |
| WO 2018108546 | A2 | | 21-06-2018 | KEINE | | | |

EPO FORM P0461

Für nähere Einzelheiten zu diesem Anhang : siehe Amtsblatt des Europäischen Patentamts, Nr.12/82